# EUROPEAN PATENT SPECIFICATION

(11) **EP 4 144 968 B1**
(45) Date of publication and mention of the grant of the patent: **26.03.2025**
(21) Application number: 22187742.6
(22) Date of filing: 29.07.2022
(51) Int. Cl.: F02B 37/18, F02D 13/02, F02D 41/00, F02B 37/02, F02B 37/22, F01L 13/00

(54) **CONTROL DEVICE FOR A SUPERCHARGED ENGINE PROVIDED WITH TWO EXHAUST VALVES PER CYLINDER**
STEUERUNGSVORRICHTUNG FÜR EINEN MIT ZWEI AUSLASSVENTILEN PRO ZYLINDER AUSGESTATTETEN UND AUFGELADENEN MOTOR
DISPOSITIF DE COMMANDE D'UN MOTEUR SURALIMENTÉ POURVU DE DEUX SOUPAPES D'ÉCHAPPEMENT PAR CYLINDRE

(30) Priority: 30.08.2021 JP 2021140471
(43) Date of publication of application: 08.03.2023
(73) Proprietor: MAZDA MOTOR CORPORATION, Hiroshima 730-8670 (JP)
(72) Inventor: HORII, Hideya, Aki-gun, Hiroshima (JP); HATABU, Atsuhiro, Aki-gun, Hiroshima (JP)
(74) Representative: Müller-Boré & Partner Patentanwälte PartG mbB

(56) References cited:
- DE-A1- 102017 100 023
- DE-A1- 3 821 935
- US-A1- 2006 070 382
- US-A1- 2011 219 767
- US-A1- 2016 131 021
- US-A1- 2016 131 054

## Description

### [Technical Field]

The technique disclosed herein relates to a control device for an engine.

### [Background Art]

In recent years, although electric vehicles, such as electric automobiles, have been widely used, many vehicles still use an engine as a power source. Further, demands on engines, such as further improvements in thermal efficiency, are still high.

For example, Patent Literature 1 discloses, as one example of an engine using a blowdown supercharging system, an engine that, in each combustion chamber, includes plural exhaust ports which communicate with exhaust passages independent from each other and plural exhaust valves which are disposed to the respective exhaust ports and whose valve-opening time points are different from each other.

Here, the gas passage is composed of a first exhaust passage which communicates with a first exhaust valve opening in an early period and in which a turbine of a turbosupercharger is disposed and a second exhaust passage which communicates with a second exhaust valve opening at a time point later than the first exhaust valve and is united with the first exhaust passage while circumventing the turbine.

In the engine, high-pressure exhaust gas jetted out in response to opening of the first exhaust valve rotates the turbine from an end period of an expansion stroke to an intermediate period of an exhaust stroke. Meanwhile, from the intermediate period to an end period of the exhaust stroke, the exhaust gas which has not completely been exhausted through the first exhaust valve is exhausted in response to opening of the second exhaust valve while circumventing or bypassing the turbine.

In a case where the engine according to Patent Literature 1 is employed, the second exhaust passage is not connected with the turbine. Thus, the second exhaust passage is at a lower pressure than the first exhaust passage. Accordingly, pump loss (hereinafter, also referred to as "discharge loss") of the second exhaust valve is reduced. In addition to that, because a valve-opening time point of the second exhaust valve is made later, exhaust gas in a cylinder is exhausted with low pump loss.

Here, in a case where exhaust gas is exhausted via the second exhaust passage, an exhaust gas amount which passes through the turbine is decreased. In this case, there is concern about lowering of a supercharging pressure. However, the first exhaust valve is opened early, the high-pressure exhaust gas is thereby jetted out, and the supercharging pressure can be secured.

### [Citation List]

### [Patent Literature]

[Patent Literature 1] Japanese Patent Laid-Open No. 11-210449
US 2016/131054 A1 describes Methods and systems for reducing exhaust energy delivered to a turbine of a turbine-generator coupled to a split exhaust engine system in order to reduce turbine over-speed conditions and/or to reduce a generator output.

DE 38 21 935 A1 describes that in an internal combustion engine with valve timing gear with two exhaust ports per cylinder and with an exhaust turbocharger, the first exhaust ports of all cylinders are connected to the turbine inlet and the second exhaust ports of all cylinders to a bypass line bypassing the turbine.

US 2006/070382 A1 and US 2016/131021 A1 are interesting prior art documents too.

### [Summary of Invention]

### [Problems to be Solved by the Invention]

It has been considered that in a case where the above blowdown supercharging system disclosed in Patent Literature 1 is employed, by a combination of lowering of pump loss (hereinafter, also referred to as "intake loss") of an intake valve in response to an increase in a supercharging pressure and the above-described reduction in discharge loss, pump loss for a whole engine tends to be improved as the supercharging pressure is increased.

However, when the inventors of the present application inspected findings in related art, the above-described tendency was observed when an engine speed was low; however, it has newly been found that when the engine speed is high, pump loss tends to increase for the whole engine as the supercharging pressure is increased.

The inventors of the present application intensively analyzed factors of the newly found tendency. As a result, it has become clear that an increase in an exhaust resistance due to a second exhaust valve is a main factor. That is, because a combustion frequency per predetermined time is higher in a higher rotation range, a total amount of exhaust gas becomes more. Because the area of the second exhaust valve is limited, more pumping work is needed for exhausting a large amount of exhaust gas.

As a measure for reducing the pumping work by the second exhaust valve, for example, increasing an exhaust amount by a first exhaust valve may be raised. However, because a first exhaust passage which is opened and closed by the first exhaust valve is at a relatively high pressure, a large amount of pumping work is assigned to the first exhaust valve, and this may result in inconvenience.

The technique disclosed herein has been made in consideration of such points, and an object thereof is to reduce an increase in pump loss in a high rotation range.

### [Means for Solving the Problems]

The above object is achieved by the invention as defined in claim 1.

In the invention, the controller closes the first switching valve and opens the second switching valve in a low rotation range, thereby causes the first exhaust passage to be connected with the turbine, and causes the second exhaust passage not to be connected with the turbine. In this case, high-energy exhaust gas exhausted by early opening of the first exhaust valve passes through the turbine via the first exhaust passage. By using high-energy exhaust gas, a necessary supercharging pressure is secured. Meanwhile, the exhaust gas exhausted by opening of the second exhaust valve which is conducted later than the first exhaust valve circumvents the turbine via the second exhaust passage. Because the second exhaust passage is at a relatively low pressure, lower pump loss of the second exhaust valve can be realized.

Meanwhile, in a high rotation range where there is concern about degradation of pump loss, the controller opens the first switching valve and closes the second switching valve. The first exhaust passage is connected with the turbine, and further the second exhaust passage is also connected with the turbine via the third exhaust passage and the first exhaust passage. In this case, the exhaust gas exhausted by opening of the second exhaust valve is guided to the turbine via the first exhaust passage similarly to the exhaust gas related to the first exhaust valve. Accordingly, because the supercharging pressure can further be made higher, lower pump loss of an intake valve (lowering of intake loss) can be realized. As a result, even in a high rotation range, it becomes possible to reduce an increase in the pump loss for the whole engine.

In the invention, the first rotational speed is set or becomes lower as the load becomes higher. In other words, as the engine speed becomes lower, the relationship of "engine speed < first rotational speed" is satisfied even with a higher load, and a blowdown supercharging system is conducted. In the blowdown supercharging system, because there is concern about an increase in the pump loss on a high rotation side, such a setting is advantageous in maximizing fuel efficiency.

Further, in an aspect of the present disclosure, the controller may set an opening of the second switching valve to a closing side compared to a fully open state in a case where the engine speed is higher than the first rotational speed and may adjust the opening of the second switching valve such that the channel area of the second exhaust passage becomes large in a case where the load on the engine is high compared to a case where the load is low. Particularly, the controller may set an opening of the second switching valve to be smaller than a fully open state in a case where the engine speed is higher than the first rotational speed and may control the second switching valve to open more as the load on the engine becomes higher.

In this aspect, the controller guides a part of the exhaust gas exhausted by opening of the second exhaust valve to the turbine but causes the remaining exhaust gas to circumvent the turbine. An exhaust gas amount guided to the turbine is controlled through the opening adjustment of the second switching valve. Consequently, the second switching valve can be utilized as a so-called wastegate valve, and further the supercharging pressure can be stabilized.

Further, in an aspect of the present disclosure, the control device for an engine may further include an exhaust valve mechanism which drives the first exhaust valve and the second exhaust valve, the exhaust valve mechanism may have a first cam set composed of a first cam profile which opens the first exhaust valve at least at an earlier time point than the initial period of the exhaust stroke and a second cam profile which opens the second exhaust valve at a later time point than the first exhaust valve, a second cam set composed of a pair of third cam profiles whose valve-opening angles are set larger than the first cam profile and the second cam profile and which open the first exhaust valve and the second exhaust valve, and a cam switching unit which performs switching to the first cam set or the second cam set, the controller may be configured to control switching by the cam switching unit based on the detection signal by the rotational speed sensor, and the controller may control the cam switching unit to open and close the first exhaust valve and the second exhaust valve by the first cam set in a case where the engine speed is lower than the first rotational speed and to open and close the first exhaust valve and the second exhaust valve by the second cam set in a case where the engine speed is higher than the first rotational speed.

Particularly, the cam switching unit may switch the first cam set and the second cam set. In other words, the cam switching unit may perform switching to the first cam set from the second cam set, and/or switching to the second cam set from the first cam set.

In this aspect, the controller opens and closes the first and second exhaust valves by the first cam set on a low rotation side but opens and closes the first and second exhaust valves by the second cam set on a high rotation side. The third cam profiles constituting the second cam set have larger valve-opening angles than the first and second cam profiles constituting the first cam set. Thus, exhaust efficiency is improved, and discharge loss of the first and second exhaust valves in a high rotation range can be reduced. Accordingly, by a combination with the above-described lower pump loss of the intake valve, it becomes possible to reduce an increase in the pump loss for the whole engine.

Further, in an aspect of the present disclosure, the first cam profile may set a valve-opening time point of the first exhaust valve to an intermediate period of a combustion stroke of the engine and may set a valve-closing time point of the first exhaust valve to fall within a period from the initial period to an intermediate period of the exhaust stroke of the engine.

Here, "an intermediate period of a combustion stroke" indicates an intermediate period in a case where the combustion stroke is divided into three generally equal parts of an initial period, an intermediate period, and an end period. Similarly, "an initial period of an exhaust stroke" indicates an initial period in a case where the exhaust stroke is divided into three generally equal parts of an initial period, an intermediate period, and an end period.

In this aspect, the valve-opening time point of the first exhaust valve is set to the intermediate period of the combustion stroke. Accordingly, for example, compared to a case where the valve opening time point is set to the end period of the combustion stroke, the valve-opening angle can be set large, and valve acceleration can be reduced. Accordingly, while the lift amount is made as large as possible, an occurrence of valve jump can be inhibited. Further, when the valve-opening time point is set to the intermediate period of the combustion stroke, this is also advantageous in reduction in influence on combustion torque compared to a case where the valve-opening time point is set to the initial period of the combustion stroke, for example.

Further, in an aspect of the present disclosure, the second cam profile may set a valve-opening time point of the second exhaust valve to the end period of the combustion stroke of the engine and may set a valve-closing time point of the second exhaust valve to fall within a period from an end period of the exhaust stroke to an initial period of an intake stroke of the engine.

Here, "an end period of a combustion stroke" indicates an end period in a case where the combustion stroke is divided into three generally equal parts of an initial period, an intermediate period, and an end period. Similarly, "an end period of an exhaust stroke" indicates an end period in a case where the exhaust stroke is divided into three generally equal parts of an initial period, an intermediate period, and an end period. "An initial period of an intake stroke" indicates an initial period in a case where the intake stroke is divided into three generally equal parts of an initial period, an intermediate period, and an end period.

In this aspect, the valve-opening time point of the second exhaust valve is set to the end period of the combustion stroke. Accordingly, for example, compared to a case where the valve opening time point is set to the initial period of the exhaust stroke, the valve-opening angle can be set large, and the valve acceleration can be reduced. Consequently, while the lift amount is made as large as possible, an occurrence of the valve jump can be inhibited.

Further, in an aspect of the present disclosure, the first cam profile may set a lift amount of the first exhaust valve smaller than a lift amount of the first exhaust valve by the third cam profile and a lift amount of the second exhaust valve by the second cam profile, and the second cam profile may set a lift amount of the second exhaust valve smaller than a lift amount of the second exhaust valve by the third cam profile.

In general, because the second exhaust valve acts at a high speed on a high rotation side, there has been concern about an occurrence of the valve jump of the second exhaust valve in a configuration in related art. However, in a case of the present disclosure, because the second cam profile is not used on a high rotation side, the lift amount can be made larger than related art.

Accordingly, the second cam profile according to this aspect sets the lift amount of the second exhaust valve relatively larger than the lift amount of the first exhaust valve by the first cam profile. Accordingly, the exhaust gas amount which circumvents the turbine can sufficiently be secured, and this further becomes advantageous in reduction in the discharge loss of the second exhaust valve. Here, the lift amount of the second exhaust valve by the second cam profile is set relatively smaller than the lift amount of the second exhaust valve by the third cam profile, and an occurrence of the valve jump can thereby more certainly be inhibited.

Further, in an aspect of the present disclosure, an operation region of the engine may include a first region on a lower rotation side of the first rotational speed and a second region on a higher rotation side of the first rotational speed, and the controller may be configured to cause a timing when the first switching valve is opened and the second switching valve is closed and a timing when switching is made from the first cam set to the second cam set to be different from each other in transition from the first region to the second region.

Both of opening the first switching valve and opening the second switching valve and switching from the first cam set to the second cam set cause an increase in the supercharging pressure. Thus, when those pieces of control are simultaneously performed in transition from a state where the supercharging pressure is low to a state where the supercharging pressure is high, a rapid increase in the supercharging pressure is caused. A rapid increase in the supercharging pressure causes a torque shock and further degradation of drivability and may thus result in inconvenience.

Accordingly, the controller according to this aspect causes the timing when open-closed states of the first and second switching valves are switched and the timing when switching is made from the first cam set to the second cam set to be different from each other. Accordingly, the supercharging pressure can be caused to smoothly rise. Accordingly, a rapid change in the supercharging pressure can be inhibited, and further drivability can be kept proper.

Further, in an aspect of the present disclosure, the control device for an engine may further include a supercharging pressure sensor which detects a supercharging pressure of the supercharger, the controller may set a target supercharging pressure in accordance with an operation state of the engine, the controller may determine whether or not the supercharging pressure reaches the target supercharging pressure based on a detection signal by the supercharging pressure sensor, and in transition from the first region to the second region, the controller may adjourn switching from the first cam set to the second cam set until a determination is made that the supercharging pressure reaches the target supercharging pressure and may open the first switching valve and close the second switching valve regardless of whether or not the supercharging pressure reaches the target supercharging pressure.

In this aspect, the controller executes switching from the first cam set to the second cam set based on whether the supercharging pressure reaches the target supercharging pressure. Accordingly, for example, switching from the first cam set to the second cam set can be performed after the supercharging pressure rises to a certain extent, and the supercharging pressure can be caused to smoothly rise. Accordingly, a rapid change in the supercharging pressure can be inhibited, and further drivability can be kept proper.

### [Advantageous Effects]

As described above, in the present disclosure, an increase in pump loss in a high rotation range can be reduced.

### [Brief Description of Drawings]

FIG. 1 is a diagram illustrating, as an example, a configuration of an engine.
FIG. 2 is a block diagram illustrating, as an example, a configuration of a control device for an engine.
FIG. 3 is a diagram illustrating, as an example, a configuration of a valve mechanism of exhaust valves.
FIG. 4 is a diagram for explaining switching between exhaust passages.
FIG. 5 is a diagram illustrating, as an example, lift curves corresponding to cam sets.
FIG. 6 is a diagram illustrating, as an example, an operation region of the engine and a basic concept of a control method of the engine.
FIG. 7 is a flowchart illustrating, as an example, a control process of the engine.
FIG. 8 is a diagram illustrating, as an example, a time chart corresponding to FIG. 7.
FIG. 9 is a plot graph illustrating, as an example, the relationship between a compressor outlet pressure and pump loss.

### [Embodiments for Carrying Out the Invention]

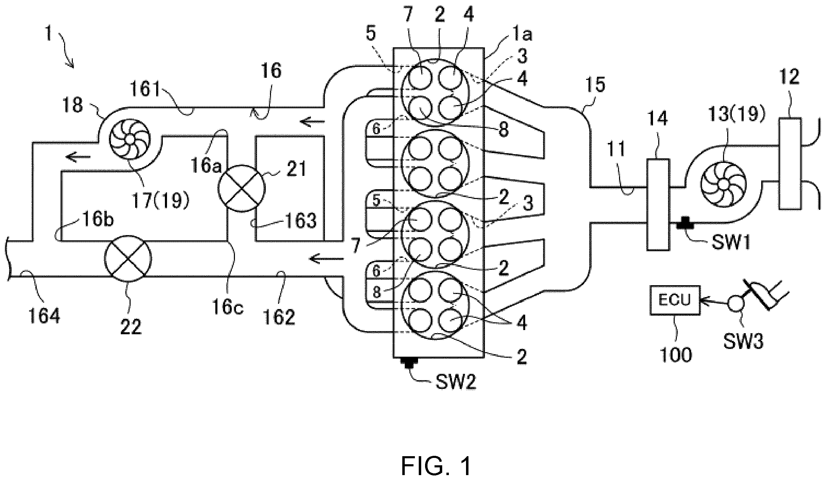

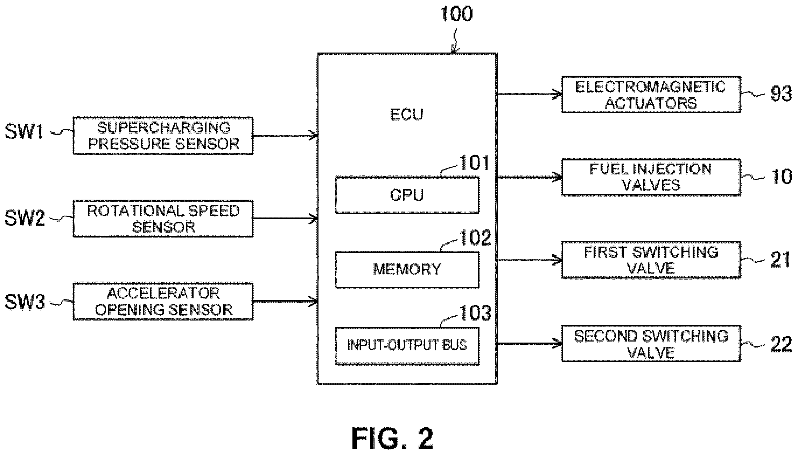

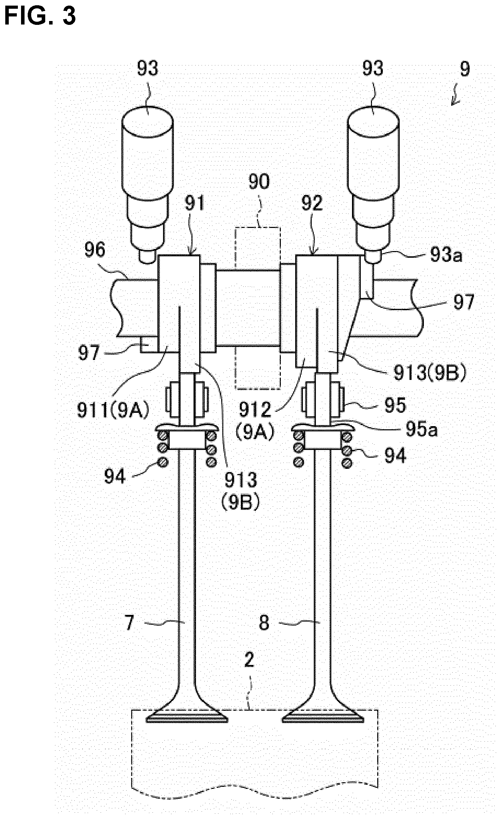

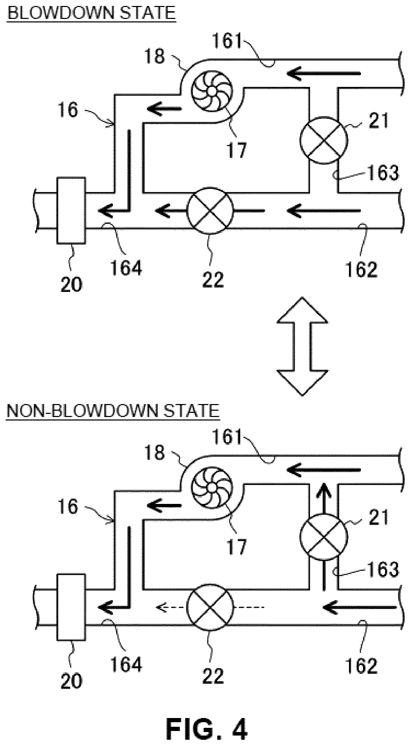

Embodiments of the present disclosure will hereinafter be described based on drawings. All of the features as shown in the drawings may not necessarily be essential. Note that the following descriptions are examples. FIG. 1 is a diagram illustrating, as an example, a configuration of an engine. FIG. 2 is a block diagram illustrating, as an example, a configuration of a control device for an engine. FIG. 3 is a diagram illustrating, as an example, a configuration of a valve mechanism of exhaust valves. FIG. 4 is a diagram for explaining switching between exhaust passages.

An engine 1 has cylinders 2. In the cylinder 2, an intake stroke, a compression stroke, a combustion stroke, and an exhaust stroke are repeated. The engine 1 is a four-stroke engine. Further, the engine 1 is installed in a vehicle or an automobile particularly with four wheels. The automobile travels by operation of the engine 1. A fuel for the engine 1 may be diesel fuel in this configuration example.

### (General Configuration of Engine)

The engine 1 has a cylinder block 1a. In an internal portion of the cylinder block 1a, one or plural cylinders 2 are formed. FIG. 1 illustrates four cylinders 2 which are aligned in series. The engine 1 illustrated in FIG. 1 may be an in-line four-cylinder diesel engine and is at the same time an engine with a turbosupercharger, which includes a supercharger or a turbocharger 19 described later.

Each of the cylinder 2 houses a piston which is not illustrated. This piston forms a combustion chamber together with the cylinder 2. Note that "combustion chamber" is not limited to the meaning of a space which is formed at a timing when the piston reaches a compression top dead center. "Combustion chamber" may mean a space which is formed with the cylinder 2 and so forth regardless of the position of the piston.

This engine 1 includes, in each of the cylinders 2, one or more, particularly two intake ports 3, 3 and one or more, particularly two intake valves 4, 4. The two intake ports 3, 3 open in a combustion chamber upper surface in each of the cylinders 2 and are provided on one side (upper side in FIG. 1) in an intake-exhaust direction which is orthogonal to an alignment direction of the cylinders 2 (cylinder array direction). The two intake valves 4, 4 respectively open and/or close the corresponding intake ports 3, 3.

The engine 1 includes, in each of the cylinders 2, first and second exhaust ports 5 and 6, first and second exhaust valves 7 and 8, and an exhaust valve mechanism 9 (the exhaust valve mechanism 9 is illustrated only in FIG. 2). The first and second exhaust ports 5 and 6 open in the combustion chamber upper surface in each of the cylinders 2 and are provided on the other side (lower side in FIG. 1) in the intake-exhaust direction. Here, "the other side in the intake-exhaust direction" indicates the opposite direction to "one side in the intake-exhaust direction". The first exhaust valve 7 opens and/or closes the first exhaust port 5. The second exhaust valve 8 opens and/or closes the second exhaust port 6. The exhaust valve mechanism 9 drives the first exhaust valve 7 and the second exhaust valve 8 so as to realize predetermined valve timings and valve lifts. As described later, the exhaust valve mechanism 9 opens the first exhaust valve 7 at an earlier time point than an initial period of the exhaust stroke (e.g. the bottom dead center) and can meanwhile open the second exhaust valve 8 at a later time point than the first exhaust valve 7.

Here, as illustrated in FIG. 2 and FIG. 3, the exhaust valve mechanism 9 is composed of a cam-switching type variable valve mechanism. Although details will be described later, the exhaust valve mechanism 9 is configured to be capable of switching a first mode in which the first exhaust valve 7 and the second exhaust valve 8 are opened by a first cam set 9A and a second mode in which the first exhaust valve 7 and the second exhaust valve 8 are opened by a second cam set 9B.

The engine 1 includes a fuel injection valve 10 in each of the cylinders 2 (illustrated only in FIG. 2). The fuel injection valve 10 is mounted on a general upper surface of the combustion chamber upper surface and directly injects fuel into the combustion chamber.

The engine 1 includes an intake passage 11 through which intake air to be supplied to each of the cylinders 2 flows. A downstream end of the intake passage 11 may be branched in accordance with the number of cylinders 2, and the branch is connected with the intake ports 3, 3 of each of the cylinders 2. Meanwhile, an upstream end of the intake passage 11 is connected with an air cleaner 12 which filters fresh air. Between the upstream end and the downstream end of the intake passage 11, in order from the upstream side, a compressor 13 which is driven by a turbine 17 described later and pressurizes intake air, an intercooler 14 which cools the intake air pressurized by this compressor 13, and a surge tank 15 are provided.

The engine 1 includes an exhaust passage 16 through which exhaust gas exhausted from each of the cylinders 2 flows. The exhaust passage 16 is connected with the first and second exhaust ports 5 and 6 of each of the cylinders 2.

In detail, the exhaust passage 16 has a first exhaust passage 161 which is connected with the first exhaust ports 5 and in which the turbine 17 is arranged and a second exhaust passage 162 which is connected with the second exhaust ports 6 and merges with the first exhaust passage 161 while circumventing or bypassing the turbine 17. The exhaust passage 16 further has a third exhaust passage 163 which connects the first exhaust passage 161 on the upstream side of the turbine 17 with the second exhaust passage 162.

More in detail, an upstream end of the first exhaust passage 161 is branched in accordance with the number of cylinders 2, and the branch is connected with the first exhaust port 5 of each of the cylinders 2. In the first exhaust passage 161, in order from the upstream side, branch portions corresponding to the first exhaust ports 5, a first connection portion 16a as a connection portion with the third exhaust passage 163, a casing 18, the turbine 17 housed in the casing 18, and a merging portion 16b with the second exhaust passage 162 are provided.

Note that the name of "first exhaust passage" is used only for convenience and does not limit a specific configuration such as the number of pieces of piping forming the passage. The "first exhaust passage" in this embodiment includes a passage which is composed of one piece of piping connecting the first exhaust ports 5 with the casing 18, the casing 18, and another piece of piping connecting the casing 18 with the merging portion.

Here, the supercharger 19 of the engine 1 is composed of the exhaust passage 16, particularly the turbine 17 provided to the first exhaust passage 161 and the compressor 13 provided to the intake passage 11. This supercharger 19 may be a so-called turbosupercharger (or a turbocharger) in a small size and for a low speed, in which at least one of the diameter and thickness of the turbine 17 are designed to be small such that supercharging performance at a low exhaust flow speed is enhanced.

Meanwhile, an upstream end of the second exhaust passage 162 is branched in accordance with the number of cylinders 2 similarly to the first exhaust passage 161, and the branch is connected with the second exhaust port 6 of each of the cylinders 2. In the second exhaust passage 162, in order from the upstream side, branch portions corresponding to the second exhaust ports 6, a second connection portion 16c as a connection portion with the third exhaust passage 163, a second switching valve 22 described later, and the merging portion 16b with the first exhaust passage 161 are provided.

An upstream end of the third exhaust passage 163 is connected with the second exhaust passage 162 on the upstream side of the second switching valve 22. Meanwhile, a downstream end of the third exhaust passage 163 is connected with the first exhaust passage 161 on the upstream side of the turbine 17. The third exhaust passage 163 is provided with a first switching valve 21 described later.

Here, the first switching valve 21 is electrically connected with an ECU 100 as a controller. The first switching valve 21 opens and/or closes by receiving control signals from the ECU 100 and can thereby change a channel area of the third exhaust passage 163.

Meanwhile, the second switching valve 22 is provided in the second exhaust passage 162 on a downstream side of the second connection portion 16c and on the upstream side of the merging portion 16b and is electrically connected with the ECU 100 similarly to the first switching valve 21. The second switching valve 22 opens and/or closes by receiving control signals from the ECU 100 and can thereby change a channel area of the second exhaust passage 162.

Further, a catalyst 20 which purifies exhaust gas is arranged in a fourth exhaust passage 164 on the downstream side of the merging portion 16b of the first exhaust passage 161 and the second exhaust passage 162 (illustrated only in FIG. 4). This catalyst 20 purifies exhaust gas from the first exhaust passage 161 and the second exhaust passage 162 and thereafter emits that to the atmosphere.

### (Details of Exhaust Passages)

FIG. 4 illustrates only the exhaust passage 16 of the engine 1. In this engine 1, the ECU 100 controls the first switching valve 21 and the second switching valve 22 and can thereby switch a blowdown state where the first switching valve 21 is closed and the second switching valve 22 is opened and a non-blowdown state where the first switching valve 21 is opened and the second switching valve 22 is closed.

Specifically, in the blowdown state, whereas the opening of the first switching valve 21 is set to a fully closed condition, the opening of the second switching valve 22 is set to a fully open condition. In this blowdown state, the turbine 17 is interposed on a halfway portion from the first exhaust passage 161 to the fourth exhaust passage 164 and the catalyst 20, but the turbine 17 is not interposed on a halfway portion from the second exhaust passage 162 to the fourth exhaust passage 164 and the catalyst 20. In other words, in the blowdown state, the turbine 17 is arranged between the first exhaust ports 5 and the catalyst 20, but the turbine 17 is not arranged between the second exhaust ports 6 and the catalyst 20.

When the engine 1 is operated in the blowdown state, only the exhaust gas exhausted from the first exhaust valves 7 to the first exhaust passage 161 passes through the turbine 17, but the whole exhaust gas exhausted from the second exhaust valves 8 to the second exhaust passage 162 circumvents the turbine 17. The blowdown state can be used in a first stationary mode and a transient mode which will be described later.

Further, in the non-blowdown state, whereas the opening of the first switching valve 21 is set to the fully open condition, the opening of the second switching valve 22 is set to a closing side compared to the first switching valve 21. In other words, "closing of the second switching valve 22" in the non-blowdown state is not limited to the fully closed condition of the second switching valve 22 but indicates a condition where the second switching valve 22 is relatively closed to the first switching valve 21. In this non-blowdown state, similarly to the blowdown state, the turbine 17 is interposed on a halfway portion from the first exhaust passage 161 to the fourth exhaust passage 164 and the catalyst 20. Similarly, in the non-blowdown state, the turbine 17 is interposed also on a halfway portion from the second exhaust passage 162 to the fourth exhaust passage 164 and the catalyst 20. In other words, in the non-blowdown state, the turbine 17 is arranged between the first exhaust ports 5 and the catalyst 20, and the turbine 17 is also arranged between the second exhaust ports 6 and the catalyst 20.

When the engine 1 is operated in the non-blowdown state, the exhaust gas exhausted from the first exhaust valves 7 to the first exhaust passage 161 and at least a part of the exhaust gas exhausted from the second exhaust valves 8 to the second exhaust passage 162 pass through the turbine 17. The non-blowdown state can be used in a second stationary mode.

### (Details of Exhaust Valve Mechanism)

FIG. 3 illustrates only a certain cylinder 2 in the engine 1. The exhaust valve mechanism 9 includes a camshaft 96 common to plural cylinders 2, and a bearing portion 90, a first cam element portion 91, and a second cam element portion 92 which are provided to each cylinder 2.

The exhaust valve mechanism 9 also includes, in each of the cylinders 2, two electromagnetic actuators 93, 93, return springs 94, 94, rocker arms 95, 95, and end cams 97, 97. Those elements are categorized into two categories of elements for driving the first exhaust valve 7 and of elements for driving the second exhaust valve, and their detailed structures are generally common to the first exhaust valve 7 and the second exhaust valve 8.

The return springs 94, 94 urge the first and second exhaust valves 7 and 8 in closing directions. The camshaft 96 is arranged around base end portions (end portions in a direction away from the combustion chamber) of the first and second exhaust valves 7 and 8 and opens the first and second exhaust valves 7 and 8 via the rocker arms 95, 95 against urging forces of the return springs 94, 94. The camshaft 96 is rotatably supported by the bearing portion 90 mounted on the engine 1. The camshaft 96 is driven to rotate via a chain by a crankshaft which is not illustrated.

Both of the first and second cam element portions 91 and 92 are formed into generally tubular shapes and are spline-fitted to the camshaft 96. The first and second cam element portions 91 and 92 are joined to the camshaft 96 in a rotation direction, integrally rotate, and are fitted onto the camshaft 96 slidably in an axis direction of the camshaft 96 (camshaft direction). Although not illustrated, the first and second cam element portions 91 and 92 are arranged on the camshaft 96 in an arrayed manner in the camshaft direction so as to correspond to each of the cylinders 2.

The first cam element portion 91 has two cam profiles in which shapes of cam lobes are different. In the following, one of the two cam profiles is denoted as a first cam profile 911, and the other is denoted as a third cam profile 913. Both of the first cam profile 911 and the third cam profile 913 of the first cam element portion 91 are cam profiles to open the first exhaust valve 7.

Specifically, the first cam profile 911 and the third cam profile 913 of the first cam element portion 91 are provided to be adjacent in the camshaft direction, either one is caused to slidingly contact with a cam follower 95a of the rocker arm 95 which is arranged on the first exhaust valve 7 side, and the first exhaust valve 7 can thereby be opened at the valve-opening angle corresponding to each of the cam profiles.

The first cam profile 911 is configured to open the first exhaust valve 7 at least at a time point earlier than the initial period of the exhaust stroke and configures the first cam set 9A together with a second cam profile 912 which opens the second exhaust valve 8 and will be described later.

The third cam profile 913 has a valve-opening angle which is set larger than the first cam profile 911 and the second cam profile 912 and makes a pair with a common third cam profile 913 provided to the second cam element portion 92. The second cam set 9B is composed of the pair of third cam profiles 913, 913.

Similarly to the first cam element portion 91, the second cam element portion 92 has two cam profiles in which shapes of cam lobes are different. In the following, one of the two cam profiles is denoted as a second cam profile 912, and the other is denoted as a third cam profile 913. Both of the second cam profile 912 and the third cam profile 913 of the second cam element portion 92 are cam profiles to open the second exhaust valve 8.

Specifically, the second cam profile 912 and the third cam profile 913 of the second cam element portion 92 are provided to be adjacent in the camshaft direction, either one is caused to slidingly contact with the cam follower 95a of the rocker arm 95 which is arranged on the second exhaust valve 8 side, and the second exhaust valve 8 can thereby be opened at the valve-opening angle corresponding to each of the cam profiles.

The second cam profile 912 is configured to open the second exhaust valve 8 at a time point later than the first exhaust valve 7 and configures the first cam set 9A together with the first cam profile 911.

The third cam profile 913 of the second cam element portion 92 is common to the third cam profile 913 of the first cam element portion 91. In other words, the two third cam profiles 913 open the first and second exhaust valves 7 and 8 at the same valve-opening angle with no phase difference. The third cam profile 913 of the second cam element portion 92 makes a pair with the third cam profile 913 of the first cam element portion 91. The second cam set 9B is composed of the pair of third cam profiles 913, 913.

The end cams 97 are respectively provided to one end side (left side on the page of FIG. 4) of the first cam element portion 91 in the camshaft direction and to the other end side (right side on the page of FIG. 4) of the second cam element portion 92 in the camshaft direction. Each of the end cams 97 is formed such that a lift amount in the camshaft direction gradually increases from a reference surface with respect to the rotation direction and returns to the reference surface at a lift end position.

The electromagnetic actuators 93 are arranged on respective radial-direction (the radial direction of the camshaft 96) outer sides of the first and second cam element portions 91 and 92 and arranged in the positions corresponding to the end cams 97 on both sides in the camshaft direction. The electromagnetic actuator 93 has a pin portion 93a which is capable of being protruded toward the camshaft 96 when the electromagnetic actuator 93 is energized. In a state where the electromagnetic actuator 93 is not energized in accordance with a control signal from the ECU 100, the pin portion 93a is retained in a non-actuating position on the radial-direction outer side by a permanent magnet provided to an internal portion of the actuator. Meanwhile, when the electromagnetic actuator 93 is energized, the pin portion 93a is protruded to a radial-direction inner side against the permanent magnet and advances to an actuating position.

When the pin portions 93a advance to the actuating positions, distal end portions of the pin portions 93a slidingly contact with the respective end cams 97, and the first and second cam element portions 91 and 92 are integrally slid in the camshaft direction.

Specifically, when the electromagnetic actuator 93 on the one end side of the first cam element portion 91 is actuated and the pin portion 93a is caused to slidingly contact with the end cam 97 on the one end side of the first cam element portion 91, the first cam element portion 91 and the second cam element portion 92 slide to the other end side in the camshaft direction. This slide causes the two third cam profiles 913 to be shifted so as to slidingly contact respectively with the rocker arm 95 on the first exhaust valve 7 side and the rocker arm 95 on the second exhaust valve 8 side. When this shift is completed, the first exhaust valve 7 and the second exhaust valve 8 are opened and/or closed by the second cam set 9B composed of the two third cam profiles 913.

Meanwhile, when the electromagnetic actuator 93 on the other end side of the second cam element portion 92 is actuated and the pin portion 93a is caused to slidingly contact with the end cam 97 on the other end side of the second cam element portion 92, the first cam element portion 91 and the second cam element portion 92 slide to the one end side in the camshaft direction. This slide causes the first cam profile 911 to be shifted so as to slidingly contact with the rocker arm 95 on the first exhaust valve 7 side and causes the second cam profile 912 to be shifted so as to slidingly contact with the rocker arm 95 on the second exhaust valve 8 side. When this shift is completed, the first exhaust valve 7 and the second exhaust valve 8 are opened and/or closed by the first cam set 9A composed of the first cam profile 911 and the second cam profile 912.

In such a manner, the first cam element portion 91 and the second cam element portion 92 are slid in the camshaft direction, and switching to the first cam set 9A or the second cam set 9B can thereby be performed. A cam switching unit in this embodiment is composed of the end cam 97 and the electromagnetic actuator 93.

### (Details of Valve-Opening Angle)

In a state where switching is performed to the first cam set 9A, the first exhaust valve 7 is opened and/or closed by the first cam profile 911, and the second exhaust valve 8 is opened and/or closed by the second cam profile 912. On the other hand, in a state where switching is performed to the second cam set 9B, the first exhaust valve 7 and the second exhaust valve 8 are opened and/or closed by the third cam profiles 913.

### - Valve Timing -

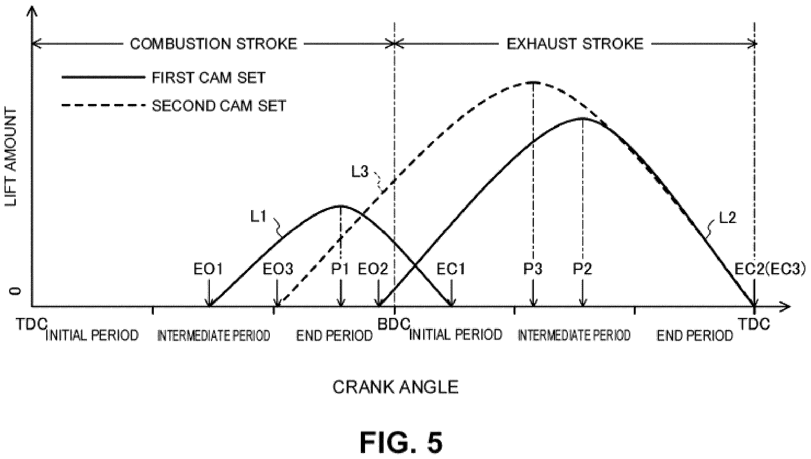

FIG. 5 is a diagram illustrating, as an example, lift curves corresponding to the cam sets.

In order to illustrate, as an example, valve-opening angles by the first cam set 9A, FIG. 5 illustrates a lift curve L1 of the first exhaust valve 7 by the first cam profile 911 and a lift curve L2 of the second exhaust valve 8 by the second cam profile 912. In order to illustrate, as an example, a valve-opening angle by the second cam set 9B, FIG. 5 also illustrates a lift curve L3 of the first exhaust valve 7 and the second exhaust valve 8 by the third cam profiles 913.

As illustrated in FIG. 5, the first cam profile 911 sets a valve-opening time point (first valve-opening time point) EO1 of the first exhaust valve 7 to a time point earlier than a valve-opening time point (third valve-opening time point) EO3 of the first exhaust valve 7 by the third cam profile 913.

Specifically, the valve-opening time point EO1 of the first exhaust valve 7 by the first cam profile 911, in other words, the first valve-opening time point EO1 is set to an intermediate period of the combustion stroke of the engine 1, and the third valve-opening time point EO3 is set to fall within a period from a latter half of the intermediate period to a former half of an end period of the combustion stroke of the engine 1.

Here, the intermediate period of the combustion stroke indicates an intermediate period in a case where the combustion stroke is divided into three equal parts of an initial period, an intermediate period, and an end period. The same applies to the end period of the combustion stroke. Further, "the latter half of the intermediate period" and "the former half of the end period" respectively indicate a latter half and a former half in a case where the corresponding period is divided into two parts.

Further, the first cam profile 911 sets a valve-closing time point (first valve-closing time point) EC1 of the first exhaust valve 7 to a time point later than the third valve-opening time point EO3 and a time point earlier than a valve-closing time point (third valve-closing time point) EC3 of the first exhaust valve 7 by the third cam profile 913.

Specifically, the valve-closing time point EC1 of the first exhaust valve 7 by the first cam profile 911, in other words, the first valve-closing time point EC1 is set to the initial period of the exhaust stroke of the engine 1, and the third valve-closing time point EC3 is set to the latter half of an end period of the exhaust stroke of the engine 1.

Here, the initial period of the exhaust stroke indicates an intermediate period in a case where the exhaust stroke is divided into three equal parts of an initial period, an intermediate period, and an end period. The same applies to the end period of the exhaust stroke. Further, similarly to the "the latter half of the intermediate period", "the latter half of the end period" indicates a latter half in a case where the end period is divided into two parts.

As illustrated in FIG. 5, the second cam profile 912 sets a valve-opening time point (second valve-opening time point) EO2 of the second exhaust valve 8 to a time point later than the first valve-opening time point EO1 and a valve-opening time point of the second exhaust valve 8 by the third cam profile 913, in other words, the third valve-opening time point EO3 and a time point earlier than the first valve-closing time point EC1 and a valve-closing time point of the second exhaust valve 8 by the third cam profile 913, in other words, the third valve-closing time point EC3.

Specifically, the valve-opening time point EO2 of the second exhaust valve 8 by the second cam profile 912, in other words, the second valve-opening time point EO2 is set to the latter half of the end period of the combustion stroke of the engine 1.

Further, the second cam profile 912 sets a valve-closing time point (second valve-closing time point) EC2 of the second exhaust valve 8 to a time point later than the first valve-closing time point EC1 and a time point generally the same as the valve-closing time point of the second exhaust valve 8 by the third cam profile 913, in other words, the third valve-closing time point EC3.

Specifically, the valve-closing time point EC2 of the second exhaust valve 8 by the second cam profile 912, in other words, the second valve-closing time point EC2 is set to the latter half of the end period of the exhaust stroke of the engine 1.

Specifically, the valve-closing time point EC1 of the first exhaust valve 7 by the first cam profile 911 is set to the initial period of the exhaust stroke of the engine 1, and the valve-closing time point EC3 of the first exhaust valve 7 by the third cam profile 913 is set to the latter half of the end period of the exhaust stroke of the engine 1.

Further, as illustrated in FIG. 5, the lift curve L1 of the first exhaust valve 7 by the first cam profile 911 overlaps with the lift curve L2 of the second exhaust valve 8 by the second cam profile 912 in a period including a bottom dead center (BDC) which forms a boundary between the combustion stroke and the exhaust stroke.

### - Valve Lift -

The first cam profile 911 sets a lift amount of the first exhaust valve 7 (first lift amount) smaller than a lift amount of the first exhaust valve 7 by the third cam profile 913 (third lift amount) and a lift amount of the second exhaust valve 8 by the second cam profile 912 (second lift amount). As illustrated in FIG. 5, a peak position P1 of the first lift amount is positioned between the third valve-opening time point EO3 and the second valve-opening time point EO2.

The second cam profile 912 sets a lift amount of the second exhaust valve 8 (second lift amount) smaller than a lift amount of the second exhaust valve 8 by the third cam profile 913 (third lift amount). As illustrated in FIG. 5, a peak position P2 of the second lift amount is positioned between the first valve-closing time point EC1 and the third valve-closing time point EC3. Further, a peak position P3 of the third lift amount is positioned between the peak position P2 of the second lift amount and the second valve-closing time point EC2.

### (Control System of Engine)

As illustrated in FIG. 2, a control device for the engine includes the ECU (engine control unit) 100 for operating the engine 1. This ECU 100 is a controller based on a known microcomputer. The ECU 100 includes a central processing unit (CPU) 101 which executes programs, a memory 102 which is composed of a RAM (random access memory) and a ROM (read-only memory), for example, and stores programs and data, and an input-output bus 103 which inputs and outputs electric signals. The ECU 100 is one example of a controller.

As illustrated in FIG. 2, various kinds of sensors SW1 to SW3 are connected with the ECU 100. The sensors SW1 to SW3 input respective detection signals to the ECU 100.

Specifically, the sensors SW1 to SW3 include a supercharging pressure sensor SW1 that is arranged on the downstream side of the compressor 13 in the intake passage 11 and detects a pressure of gas which has just been pressurized by the compressor 13 (hereinafter, this will be defined as "supercharging pressure"), a rotational speed sensor SW2 which is mounted on the engine 1 and detects an engine speed, and an accelerator opening sensor SW3 which is mounted on an accelerator pedal mechanism and detects an accelerator opening corresponding to an operation amount of an accelerator pedal.

The ECU 100 assesses an operation state of the engine 1 based on those detection signals and calculates a control amount for each device. The ECU 100 outputs control signals related to the calculated control amounts to the electromagnetic actuators 93 constituting the cam switching unit, the fuel injection valves 10, the first switching valve 21, and the second switching valve 22.

For example, the ECU 100 calculates a target value of a load (target load) on the engine 1 based on the accelerator opening obtained from the detection signal by the accelerator opening sensor SW3. Based on the calculated target load and the engine speed obtained from the detection signal by the rotational speed sensor SW2, the ECU 100 decides a target value of the supercharging pressure (target supercharging pressure), a fuel amount to be injected from the fuel injection valve 10, target values of openings (target openings) of the first switching valve 21 and the second switching valve, and an actuation state of the electromagnetic actuator 93.

In order to realize the openings and so forth which are calculated in such a manner, the ECU 100 controls opening and/or closing of the first switching valve 21 and the second switching valve 22 and switching of the cams by the cam switching unit. Details of control of the engine 1 by the ECU 100 will be described later.

### (Operation Region of Engine)

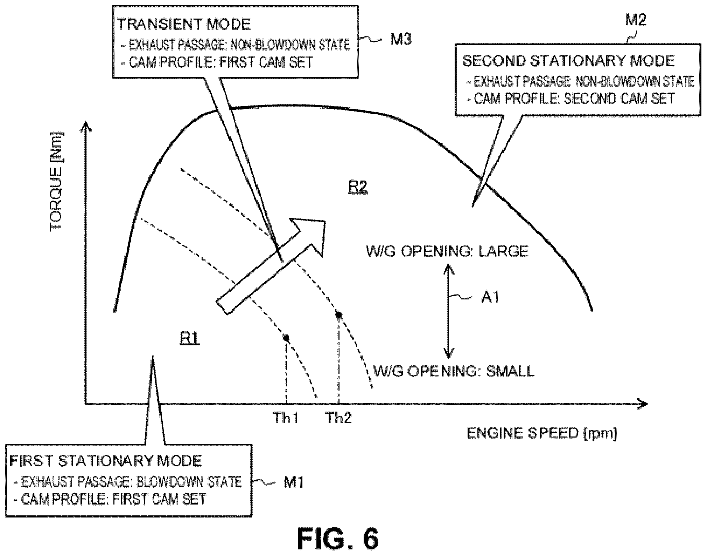

FIG. 6 is a diagram illustrating, as an example, an operation region of the engine 1 and a basic concept of a control method of the engine 1. As illustrated in FIG. 6, the operation region of the engine 1 is divided into plural regions in accordance with a level of the load (torque) and a level of the engine speed. Specifically, the operation region of the engine 1 includes a first region R1 on a lower rotation side of a first rotational speed Th and a second region R2 on a higher rotation side of this first rotational speed Th1.

Here, in a case where the load on the engine 1 is high, the first rotational speed Th1 is set low compared to a case where the load is low. In other words, the first region R1 is an operation region in a range of low load and low rotation, and the second region R2 is an operation region in a range of high load and high rotation. A boundary between the first region R1 and the second region R2 shifts toward a lower rotation side as the load becomes higher and shifts toward a lower load side as the engine speed becomes higher.

Further, as illustrated in FIG. 6, the first rotational speed Th1 is a value which exceeds zero at the lowest load (value of vertical axis = 0). The ECU 100 according to this embodiment can execute both of the first stationary mode and the second stationary mode, which will be described later, in an operation region on the lower load side between two operation regions which result from division in accordance with the level of load. In the operation region on the higher load side between the two operation regions resulting from the division, the ECU 100 can execute only the second stationary mode in accordance with the magnitude of load.

The ECU 100 according to this embodiment operates the engine 1 in the first stationary mode which corresponds to a blowdown supercharging system in the first region R1, operates the engine 1 in the second stationary mode which is similar to a usual supercharging system in the second region R2, and operates the engine 1 in the transient mode which is different from both of the blowdown supercharging system and the usual supercharging system in a transient period in which transition is made from the first region R1 to the second region R2.

### (First Stationary Mode)

### - Basic Concept of First Stationary Mode -

As illustrated in FIG. 6, in a case where the engine speed is lower than the first rotational speed Th1, that is, in a case where the operation state of the engine 1 is in the first region R1, the ECU 100 operates the engine 1 in the first stationary mode which corresponds to the blowdown supercharging system.

Specifically, in the first stationary mode, the ECU 100 controls the first switching valve 21 and the second switching valve 22 and thereby sets the exhaust passage 16 to the blowdown state where the first switching valve 21 is closed and the second switching valve 22 is opened (see a reference character M1 in FIG. 6). In the blowdown state, the exhaust gas exhausted from the first exhaust valves 7 to the first exhaust passage 161 passes through the turbine 17 and is led to the catalyst 20, and the exhaust gas exhausted from the second exhaust valves 8 to the second exhaust passage 162 is exhausted to the catalyst 20 while circumventing the turbine 17.

More specifically, in the first stationary mode, the ECU 100 may set the opening of the first switching valve 21 to a fully closed state and set the opening of the second switching valve 22 to a fully open state.

In addition, in the first stationary mode, the ECU 100 may control the electromagnetic actuators 93 and thereby open the first exhaust valve 7 and the second exhaust valve 8 by the first cam set 9A. Accordingly, the first exhaust valve 7 opens at the time point EO1 earlier than at least the initial period of the exhaust stroke, and the second exhaust valve 8 opens at the time point EO2 later than the first exhaust valve 7.

In the first stationary mode, so-called blowdown supercharging is realized. That is, when the first exhaust valve 7 is opened at a timing earlier than the initial period of the exhaust stroke, in response to this opening, high-pressure exhaust gas is jetted into the first exhaust passage 161, and the high-pressure exhaust gas rotates the turbine 17. Meanwhile, the second exhaust valve 8 is opened at a timing later than the first exhaust valve 7, and the exhaust gas which has not completely been exhausted through the first exhaust valve 7 is thereby exhausted to the outside of a vehicle while circumventing or bypassing the turbine 17.

In the first stationary mode, the first exhaust passage 161 is connected with the catalyst 20 via the turbine 17, but the second exhaust passage 162 is connected with the catalyst 20 not via the turbine 17. Because the connection is made not via the turbine 17, the second exhaust passage 162 is at a lower pressure than the first exhaust passage 161. Accordingly, pump loss (discharge loss) of the second exhaust valve 8 is reduced. In addition to that, because the valve-opening time point EO2 of the second exhaust valve 8 is made later, the exhaust gas in the cylinder 2 is exhausted with low pump loss.

On the other hand, when exhaust gas is exhausted via the second exhaust passage 162, an exhaust gas amount which passes through the turbine 17 is decreased. There is concern about lowering of the supercharging pressure by the amount of the decrease of the exhaust gas amount which passes through the turbine 17. However, the first exhaust valve 7 is opened early by using the first cam set 9A, the high-pressure exhaust gas is thereby jetted out, and the supercharging pressure can be secured.

In general, pump loss (intake loss) of the intake valve 4 lowers in accordance with an increase in the supercharging pressure. It has been considered that by a combination of this fact and the above-described reduction in discharge loss of the second exhaust valve 8, the pump loss for the whole engine 1 tends to be lowered as the supercharging pressure is increased.

However, when the inventors of the present application inspected the blowdown supercharging system such as the first stationary mode, new findings have been discovered. That is, the above-described tendency was observed when the engine speed was low; however, it has newly been found that when the engine speed is high, the pump loss tends to increase as the supercharging pressure is increased.

### - Problems of Blowdown Supercharging System -

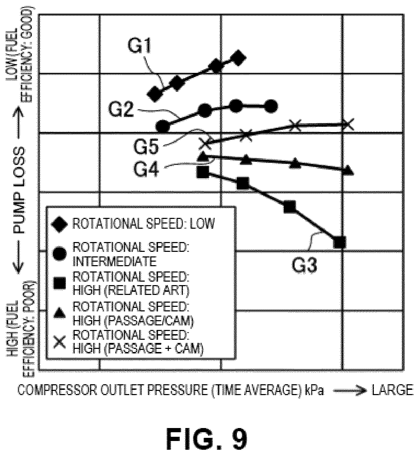

FIG. 9 is a plot graph illustrating, as an example, the relationship between a compressor outlet pressure and the pump loss. The horizontal axis in FIG. 9 represents an outlet pressure of the compressor 13, in other words, the supercharging pressure, and the vertical axis in FIG. 9 represents a PMEP (pumping mean effective pressure) that indicates the magnitude of the pump loss which is obtained by summing the discharge loss due to the exhaust valves and the intake loss due to the intake valves. The plot graph illustrated in FIG. 9 means that as the value of the vertical axis becomes greater, the pump loss is lower and fuel efficiency performance is more excellent.

Further, a rhombic plot G1 in FIG. 9 corresponds to a low rotation range around 1,000 rpm, a circular plot G2 corresponds to an intermediate rotation range around 2,000 rpm, and a rectangular plot G3 corresponds to a high rotation range around 3,000 rpm. Each of those three kinds of plots is obtained by performing simulations for an engine which uses the blowdown supercharging system similarly to the above first stationary mode.

In the low rotation range represented by the plot G1, similarly to findings in related art, the pump loss changes in a direction to improve the fuel efficiency performance in accordance with an increase in the supercharging pressure. Meanwhile, in the intermediate rotation range represented by the plot G2, although not as much as the pump loss in the low rotation range, the pump loss shifts while slightly lowering or maintaining a generally constant value in accordance with an increase in the supercharging pressure. Further, the plots G2 also represent that the pump loss degrades at each supercharging pressure compared to the plots G1.

However, in the high rotation range represented by the plot G3, differently from findings in related art, it has become clear that the pump loss becomes higher in accordance with an increase in the supercharging pressure. Further, the plots G3 also represent that the pump loss degrades at each supercharging pressure compared to the plots G1 and the plots G2.

The inventors of the present application intensively analyzed factors of the newly found tendency. As a result, it has become clear that an increase in an exhaust resistance due to the second exhaust valve 8 is a main factor. That is, because a combustion frequency per predetermined time is higher in a higher rotation range, a total amount of exhaust gas becomes more. Because the area of the second exhaust valve 8 is limited, more pumping work is needed for exhausting a large amount of exhaust gas.

As a measure for reducing the pumping work by the second exhaust valve 8, for example, increasing an exhaust amount by the first exhaust valve 7 may be raised. However, because the first exhaust passage 161 which is opened and/or closed by the first exhaust valves 7 is at a relatively high pressure, a large amount of pumping work is assigned to the first exhaust valves 7, and this may result in inconvenience.

Accordingly, the inventors of the present application have newly conceived to operate the engine 1 in the second stationary mode which is different from the above first stationary mode in the second region R2 on a higher rotation side of the first region R1.

### (Second Stationary Mode)

### - Basic Concept 1 of Second Stationary Mode (Passage Switching) -

As illustrated in FIG. 6, in a case where the engine speed is the first rotational speed Th1 or more or higher than the first rotational speed Th1, that is, in a case where the operation state of the engine 1 is in the second region R2, the ECU 100 operates the engine 1 in the second stationary mode which is different from the blowdown supercharging system. Switching from the first stationary mode to the second stationary mode is executable by controlling the first switching valve 21 and the second switching valve 22 by the ECU 100, for example.

Specifically, in the second stationary mode, the ECU 100 controls the first switching valve 21 and the second switching valve 22 and thereby sets the exhaust passage 16 to the non-blowdown state where the first switching valve 21 is opened and the second switching valve 22 is closed (see a reference character M2 in FIG. 6). In this non-blowdown state, the first exhaust passage 161 is connected with the turbine 17, and further the second exhaust passage 162 is also connected with the turbine 17 via the third exhaust passage 163 and the first exhaust passage 161. In this case, the exhaust gas exhausted by opening of the second exhaust valve 8 is guided to the turbine 17 via the first exhaust passage 161 similarly to the exhaust gas related to the first exhaust valve 7. Accordingly, because the supercharging pressure can further be made higher, lower pump loss of the intake valve 4 can be realized. As a result, even in a high rotation range, it becomes possible to reduce an increase in the pump loss for the whole engine.

A triangular plot G4 in FIG. 9 represents the pump loss in a case where one of switching of the first and second switching valves 21 and 22 and cam switching described later is performed in a high rotation range around 3,000 rpm. As illustrated in FIG. 9, the plots G4 also represent that an improvement related to the pump loss is made at each supercharging pressure compared to the plots G3. Further, in accordance with an increase in the supercharging pressure, the pump loss represented by the plots G4 is changed more gently than the pump loss represented by the plots G3.

Further, as illustrated in FIG. 6, the first rotational speed Th1 may be set lower as the load becomes higher.

In other words, as the engine speed becomes lower, the relationship of "engine speed < first rotational speed Th1" is satisfied even with a higher load, and the engine 1 is operated in the first stationary mode. As described above, because there is concern about an increase in the pump loss on a high rotation side in the first stationary mode, such a setting is advantageous in maximizing fuel efficiency.

Here, "closing the second switching valve 22" in the second stationary mode is not limited to setting the second switching valve 22 to the fully closed state. The opening of the second switching valve 22 may be set to at least a closing side compared to the fully open state or a closing side compared to the first switching valve 21. For example, the ECU 100 according to this embodiment sets the opening of the second switching valve 22 to a closing side compared to the fully open state in a case where the engine speed is higher than the first rotational speed Th1.

Particularly, the opening of the second switching valve 22 may smaller than the fully open state in a case where the engine speed is higher than the first rotational speed Th1.

More specifically, in the second stationary mode, the ECU 100 sets the opening of the first switching valve 21 to the fully open state and sets the opening of the second switching valve 22 to the fully closed state or to a closing side compared to the fully open state.

Furthermore, in a case where the load on the engine 1 is high in the second stationary mode, the ECU 100 adjusts the opening of the second switching valve 22 such that the channel area of the second exhaust passage 162 becomes large compared to a case where the load is low.

Particularly, in the second stationary mode, the opening of the second switching valve 22 becomes larger as the load becomes higher.

In a case where the load on the engine 1 is high, the ECU 100 may set the opening of the second switching valve 22 large compared to a case where the load is low.

For example, the ECU 100 divides the second region R2 into two parts of a high-rotation high-load region and a low-rotation low-load region and conducts opening adjustment of the second switching valve 22 in the former region. In such a case, similarly to the first rotational speed Th1, the rotational speed for dividing the second region R2 into two parts (second rotational speed Th2) can be set higher when the load on the engine 1 is high than when the load is low. The second rotational speed Th2 is set in such a manner and thereby changes generally in parallel with the first rotational speed Th1.

As indicated by A1 in FIG. 6, in the high-rotation high-load region of the second region R2, the ECU 100 controls the second switching valve 22 so as to make the opening (W/G opening) larger when the load on the engine 1 is high than when the load is low. In other words, the opening (W/G opening) of the second switching valve 22 is set to become larger as the load on the engine 1 becomes higher.

In this case, the ECU 100 guides a part of the exhaust gas exhausted by opening of the second exhaust valve 8 to the turbine 17 but causes the remaining exhaust gas to circumvent the turbine 17. The exhaust gas amount guided to the turbine 17 is controlled through the opening adjustment of the second switching valve 22. Consequently, the second switching valve 22 can be utilized as a so-called wastegate valve, and further the supercharging pressure can be stabilized.

### - Basic Concept 2 of Second Stationary Mode (Cam Switching) -

As illustrated in FIG. 6, in a case where the engine speed is the first rotational speed Th1 or more or higher than the first rotational speed Th1, that is, in a case where the engine 1 is operated in the second stationary mode, the ECU 100 according to this embodiment is configured to open and/or close the first and second exhaust valves 7 and 8 by the second cam set 9B in addition to the above-described switching from the blowdown state to the non-blowdown state. Switching to the second cam set 9B is executable by controlling at least the electromagnetic actuators 93 by the ECU 100.

Specifically, the ECU 100 opens and/or closes the first and second exhaust valves 7 and 8 by the first cam set 9A in the first region R1 on the low rotation side but opens and/or closes the first and second exhaust valves by the second cam set 9B in the second region R2 on the high rotation side (see a reference character M2 in FIG. 6). The third cam profiles 913 constituting the second cam set 9B may have larger valve-opening angles than the first and second cam profiles 911 and 912 constituting the first cam set 9A. Thus, exhaust efficiency is improved, and the discharge loss of the first and second exhaust valves 7 and 8 in a high rotation range can be reduced. By a combination with lower pump loss of the intake valve 4 by control of the first and second switching valves 21 and 22, it becomes possible to reduce an increase in the pump loss for the whole engine 1.

A cross-shaped plot G5 in FIG. 9 represents the pump loss in a case where both of switching of the first and second switching valves 21 and 22 and switching from the first cam set 9A to the second cam set 9B are performed in a high rotation range around 3,000 rpm. As illustrated in FIG. 9, the plots G4 represent that an improvement related to the pump loss is made at each supercharging pressure compared to the plots G3 and the plots G4. Further, in accordance with an increase in the supercharging pressure, the pump loss represented by the plots G5 is gently changed differently from the pump loss represented by the plots G3 and the plots G4.

Here, as described by using FIG. 5, the first cam profile 911 sets the valve-opening time point EO1 of the first exhaust valve 7 to the intermediate period of the combustion stroke. Accordingly, for example, compared to a case where the valve opening time point EO1 is set to the end period of the combustion stroke, the valve-opening angle can be set large, and valve acceleration can be reduced. Accordingly, while the lift amount is made as large as possible, an occurrence of valve jump can be inhibited. Further, when the valve-opening time point EO1 is set to the intermediate period of the combustion stroke, this is also advantageous in reduction in influence on combustion torque compared to a case where the valve-opening time point EO1 is set to the initial period of the combustion stroke, for example.

Further, as described by using FIG. 5, the second cam profile 912 sets the valve-opening time point EO2 of the second exhaust valve 8 to the end period of the combustion stroke. Accordingly, for example, compared to a case where the valve opening time point EO2 is set to the initial period of the exhaust stroke, the valve-opening angle can be set large, and the valve acceleration can be reduced. Consequently, while the lift amount is made as large as possible, an occurrence of the valve jump can be inhibited.

Further, in general, because the second exhaust valve 8 acts at a high speed on the high rotation side, there has been concern about an occurrence of the valve jump of the second exhaust valve 8 in a configuration in related art. However, in a case of this embodiment, because the second cam profile 912 is not used in the second region R2 on the high rotation side, the lift amount can be made larger than related art.

Then, as described by using FIG. 5, the second cam profile 912 sets the lift amount of the second exhaust valve 8 relatively larger than the lift amount of the first exhaust valve 7 by the first cam profile 911. Accordingly, the exhaust gas amount which circumvents the turbine 17 can sufficiently be secured, and this further becomes advantageous in reduction in the discharge loss of the second exhaust valve 8. Here, the lift amount of the second exhaust valve 8 by the second cam profile 912 is set relatively smaller than the lift amount of the second exhaust valve 8 by the third cam profile 913, and an occurrence of the valve jump can thereby more certainly be inhibited.

### (Transient Mode)

As illustrated in FIG. 6, the ECU 100 operates the engine 1 in the transient mode in transition from the first region R1 to the second region R2. In this transient mode, the ECU 100 can cause a timing when the first switching valve 21 is opened and the second switching valve 22 is closed, in other words, a timing when switching is made from the blowdown state to the non-blowdown state and a timing when switching is made from the first cam set 9A to the second cam set 9B to be different from each other.

Both of opening the first switching valve 21 and closing the second switching valve 22 and switching from the first cam set 9A to the second cam set 9B cause an increase in the supercharging pressure. Thus, when those pieces of control are simultaneously performed in transition from a state where the supercharging pressure is low to a state where the supercharging pressure is high, a rapid increase in the supercharging pressure is caused. A rapid increase in the supercharging pressure may cause a torque shock and further degradation of drivability and may thus result in inconvenience.

Accordingly, in the example illustrated in FIG. 6, the ECU 100 temporarily goes through the transient mode in transition from the first stationary mode to the second stationary mode.

In this transient mode, only switching of the openings of the first switching valve 21 and the second switching valve 22 is executed, and switching from the first cam set 9A to the second cam set 9B is adjourned or suspended (see a reference character M3 in FIG. 6).

Subsequently, based on the fact that the supercharging pressure reaches the target supercharging pressure, for example, the ECU 100 leaves the transient mode and transits to the second stationary mode. After transiting to the second stationary mode, the ECU 100 executes switching from the first cam set 9A to the second cam set 9B. In such a configuration, the supercharging pressure can be caused to smoothly rise. Accordingly, a rapid change in the supercharging pressure can be inhibited, and further drivability can be kept proper.

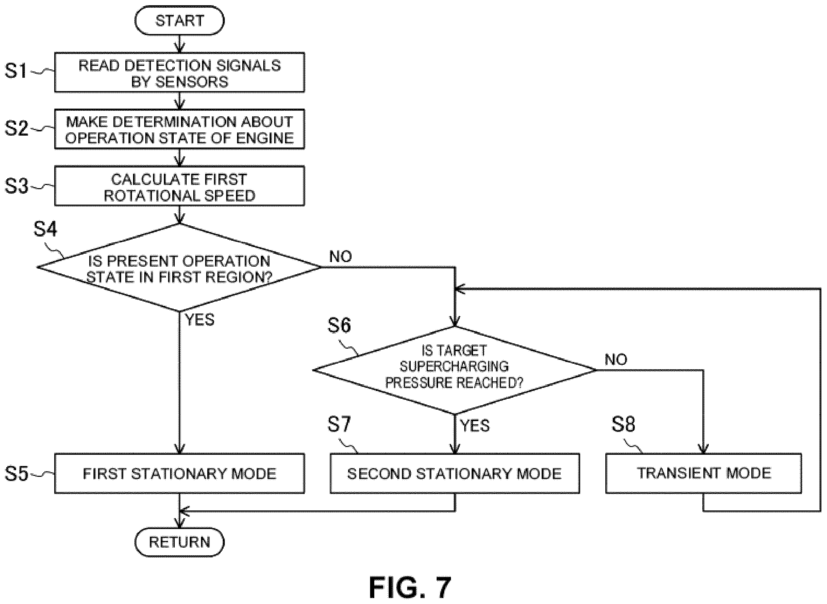

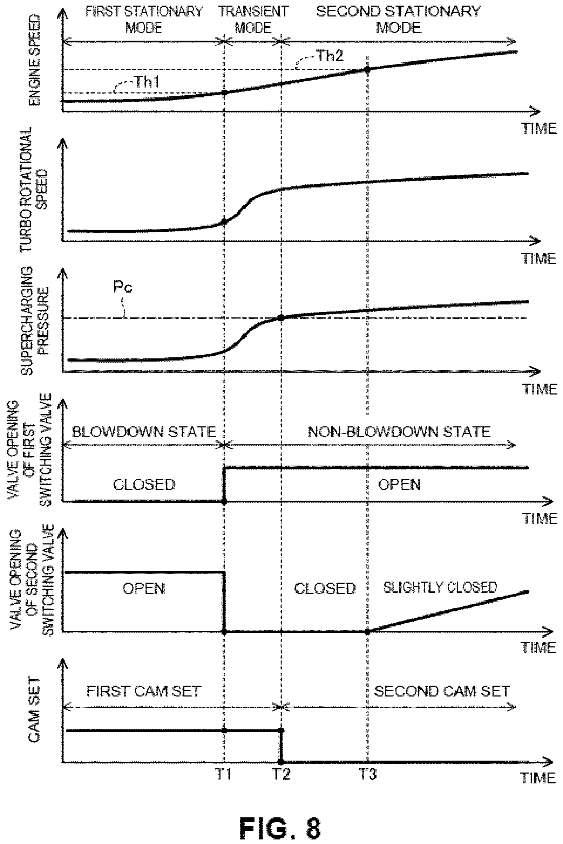

For example, as illustrated in FIG. 7 and FIG. 8 described later, the ECU 100 according to this embodiment determines whether or not the supercharging pressure reaches the target supercharging pressure based on a detection signal by the supercharging pressure sensor SW1. Then, in transition from the first region R1 to the second region R2, the ECU 100 temporarily operates the engine 1 in the transient mode until it is determined that the supercharging pressure reaches the target supercharging pressure. During the transient mode, the ECU 100 adjourns switching from the first cam set 9A to the second cam set, and the ECU 100 executes switching from the blowdown state to the non-blowdown state regardless of whether the supercharging pressure reaches the target supercharging pressure.

In such a configuration, for example, switching from the first cam set 9A to the second cam set 9B can be performed after the supercharging pressure rises to a certain extent, and the supercharging pressure can be caused to smoothly rise. Accordingly, a rapid change in the supercharging pressure can be inhibited, and further drivability can be kept proper.

More specifically, in the transient mode, the ECU 100 sets the opening of the first switching valve 21 to the fully open state and sets the opening of the second switching valve 22 to the fully closed state or to a closing side compared to the fully open state.

### (Specific Example of Control Process)

Next, a description will be made about a control process for conducting the above basic concepts and a time chart in a case where the control process is conducted. Here, FIG. 7 is a flowchart illustrating, as an example, the control process of the engine 1, and FIG. 8 is a diagram illustrating, as an example, the time chart corresponding to FIG. 7.

First, in step S1 in FIG. 7, the ECU 100 may read detection signals by the supercharging pressure sensor SW1, the rotational speed sensor SW2, the accelerator opening sensor SW3, and so forth.

In next step S2, the ECU 100 may make a determination about the operation state of the engine 1 based on the detection signals read in step S1. Specifically, in this step S2, the ECU 100 may calculate the load on the engine 1 and calculate the target supercharging pressure and so forth of the engine 1 based on the calculated load and the engine speed. In transition from the first region R1 to the second region R2, the target supercharging pressure is set higher.

In next step S3, the ECU 100 calculates the first rotational speed Th1 as the boundary between the first region R1 and the second region R2 based on the load calculated in step S2. As described above, the first rotational speed Th1 becomes lower as the load on the engine 1 becomes larger.

In next step S4, the ECU 100 may determine whether or not the present engine speed is less than the first rotational speed Th1 based on the engine speed detected in step S1 and the first rotational speed Th1 calculated in step S3. This determination is equivalent to a determination about whether or not the present operation state is in the first region R1. The ECU 100 may move the control process to step S5 in a case where this determination is YES but moves the control process to step S6 in a case of NO.

In step S5, the ECU 100 may operate the engine 1 in the first stationary mode.

For example, in a case where the engine speed is lower than the first rotational speed Th1 as in a period before a time T1 in FIG. 8, the control process moves from step S4 to step S5. In this case, the ECU 100 closes the first switching valve 21 and sets that to the fully closed state but opens the second switching valve 22 and sets that to the fully open state. Further, the ECU 100 opens the first exhaust valve 7 and the second exhaust valve 8 by the first cam set 9A. As long as the operation state is in the first region R1, the ECU 100 operates the engine 1 in the first stationary mode.

Subsequently, it is assumed that the engine speed reaches the first rotational speed Th1 at a time T1 in FIG. 8. In this case, the ECU 100 determines that the present operation state is on the outside of the first region R1 and moves the control process to step S6.

In step S6, the ECU 100 may determine whether or not the detected supercharging pressure reaches a target supercharging pressure Pc based on the detection signal by the supercharging pressure sensor SW1 which is read in step S1. The ECU 100 moves the control process to step S7 in a case where this determination is YES but moves the control process to step S8 in a case where the control process is NO.

In step S8, the ECU 100 operates the engine 1 in the transient mode. On the other hand, in step S7, the ECU 100 operates the engine 1 in the second stationary mode.

For example, in a case where the engine speed is higher than the first rotational speed Th1 and the supercharging pressure is less than the target supercharging pressure Pc as in a period at and after the time T1 and before a time T2 in FIG. 8, the control process moves from step S6 to step S8. In this case, the ECU 100 opens the first switching valve 21 and sets that to the fully open state but closes the second switching valve 22 and sets that to the fully closed state (in other words, the exhaust passage 16 is set to the blowdown state). Further, the ECU 100 suspends switching from the first cam set 9A to the second cam set 9B and continues to open the first and second exhaust valves 7 and 8 by the first cam set 9A. In a case where the engine speed is higher than the first rotational speed Th1, as long as the supercharging pressure is less than the target supercharging pressure Pc, the ECU 100 operates the engine 1 in the transient mode.

Subsequently, it is assumed that the supercharging pressure reaches the target supercharging pressure Pc at the time T2 in FIG. 8. In this case, in order to complete transition from the first stationary mode to the second stationary mode, the ECU 100 moves the control process to step S7. In this case, the ECU 100 executes switching from the first cam set 9A to the second cam set 9B while setting the exhaust passage 16 to the blowdown state and starts opening the first and second exhaust valves 7 and 8 by the second cam set 9B.

Subsequently, it is assumed that the engine speed becomes the second rotational speed Th2 or more at and after a time T3 in FIG. 8. This second rotational speed Th2 may be calculated based on the load on the engine 1 in above step S3, for example. The ECU 100 may gradually open the second switching valve 22 from the fully closed state and utilizes that as a wastegate valve. Accordingly, the supercharging pressure can be stabilized. In this case, the opening of the second switching valve 22 is set to become larger when the load on the engine 1 is high than when the load is low.

Note that as illustrated, as an example, in the flowchart in FIG. 7, in a case where the operation state of the engine 1 is on the outside of the first region R1, the transient mode is executed in accordance with the determination about the supercharging pressure; however, in a case where the operation state of the engine 1 is in the first region R1 (in other words, a case where the engine speed is lower than the first rotational speed), the first stationary mode may be immediately executed not via the steps related to the transient mode.

Particularly, in transition from the high rotation side to the low rotation side, in other words, in at and after from the second region R2 to the first region R1, the ECU 100 according to this embodiment is configured to close the first switching valve 21 and open the second switching valve 22 (a process to switch the exhaust passage 16 from the non-blowdown state to the blowdown state) and to perform switching from the second cam set 9B to the first cam set 9A at generally the same timing. Similarly to transition from the first region R1 to the second region R2, this process is executable by controlling the first switching valve 21, the second switching valve 22, and the electromagnetic actuators 93 by the ECU 100.

### <<Other Embodiments>>

Further, in the above embodiment, a configuration is made such that based on the fact that the supercharging pressure reaches the target supercharging pressure, transition is made from the transient mode to the second stationary mode; however, the present disclosure is not limited to such a configuration. For example, a configuration may be made such that transition is made from the transient mode to the second stationary mode in a case where the engine speed becomes the second rotational speed Th2 or more, and a configuration may be made such that transition is made based on an engine load.

Note that an engine to which the technique disclosed herein is applicable is not limited to the engine in the above-described configuration. The technique disclosed herein is applicable to engines in various configurations. The present disclosure can be applied to a rotary engine with a turbosupercharger, for example. Further, the present disclosure can be applied to a gasoline engine which uses gasoline as a fuel.

### [Reference Signs List]

- 1: engine
- 2: cylinder
- 5: first exhaust port
- 6: second exhaust port
- 7: first exhaust valve
- 8: second exhaust valve
- 9: exhaust valve mechanism
- 9A: first cam set
- 9B: second cam set
- 911: first cam profile
- 912: second cam profile
- 913: third cam profile
- 93: electromagnetic actuator (cam switching unit)
- 97: end cam (cam switching unit)
- 11: intake passage
- 13: compressor
- 16: exhaust passage
- 161: first exhaust passage
- 162: second exhaust passage
- 163: third exhaust passage
- 17: turbine
- 19: supercharger
- 21: first switching valve
- 22: second switching valve
- 100: ECU (controller)
- R1: first region
- R2: second region
- SW1: supercharging pressure sensor
- SW2: rotational speed sensor
- Th1: first rotational speed

## Claims

1. A control device for an engine (1), the engine (1) comprising:
a first exhaust port (5) and a second exhaust port (6) which is configured to open in each cylinder (2) of the engine (1);
a first exhaust valve (7) which is configured to open and/or close the first exhaust port (5);
a second exhaust valve (8) which is configured to open and/or close the second exhaust port (6);
an exhaust valve mechanism (9) which is configured to open the first exhaust valve (7) at least at an earlier time point than an initial period of an exhaust stroke and to meanwhile open the second exhaust valve (8) at a later time point than the first exhaust valve (7);
an exhaust passage (16) which is connected with the first exhaust port (5) and the second exhaust port (6); and
a supercharger (19) which is composed of a turbine (17) provided to the exhaust passage (16) and a compressor (13) provided to an intake passage (11) of the engine (1), wherein
the exhaust passage (16) has
a first exhaust passage (161) which is connected with the first exhaust port (5) and in which the turbine (17) is arranged,
a second exhaust passage (162) which is connected with the second exhaust port (6) and merges with the first exhaust passage (161) while circumventing the turbine (17), and
a third exhaust passage (163) which connects the first exhaust passage (161) on an upstream side of the turbine (17) with the second exhaust passage (162),
the control device comprising:
a first switching valve (21) which is configured to be arranged in the third exhaust passage (163) and to change a channel area of the third exhaust passage (163);
a second switching valve (22) which is configured to be arranged in the second exhaust passage (162) on a downstream side of a connection portion (16c) with the third exhaust passage (163) and on an upstream side of a merging portion (16b) with the first exhaust passage (161) and which is configured to change a channel area of the second exhaust passage (162);
a rotational speed sensor (SW2) which is configured to detect an engine speed;
an accelerator opening sensor (SW3); and
a controller (100) which is configured to calculate a load on the engine (1) based on a signal of the accelerator opening sensor (SW3), wherein
an operation region of the engine (1) includes a first region (R1) in which the engine speed is lower than a first rotational speed (Th1), and a second region (R2) in which the engine speed is a second rotational speed (Th2) or higher than the second rotational speed (Th2),
the controller (100) is configured to set the first rotational speed (Th1) and the second rotational speed (Th2) lower as the load on the engine (1) becomes larger and to set at constant load, the first rotational speed (Th1) smaller than the second rotational speed (Th2),
the controller (100) is configured to open the first exhaust valve (7) at least at the earlier time point than the initial period of the exhaust stroke and to meanwhile open the second exhaust valve (8) at the later time point than the first exhaust valve (7) at least in the first region (R1), and
the controller (100) is configured
to close the first switching valve (21) and open the second switching valve (22) at least in the first region (R1), and
to open the first switching valve (21) and close the second switching valve (22) at least in the second region (R2).

2. The control device according to claim 1, wherein
the controller (100) is configured to set an opening of the second switching valve (22) to a closing side compared to a fully open state in a case where the engine speed is higher than the first rotational speed (Th1) and to adjust the opening of the second switching valve (22) such that the channel area of the second exhaust passage (162) becomes large in a case where the load on the engine (1) is high compared to a case where the load is low.

3. The control device according to any one of the preceding claims, wherein
the exhaust valve mechanism (9) has
a first cam set (9A) composed of a first cam profile (911) which is configured to open the first exhaust valve (7) at least at the earlier time point than the initial period of the exhaust stroke and a second cam profile (912) which opens the second exhaust valve (8) at the later time point than the first exhaust valve (7),
a second cam set (9B) composed of a pair of third cam profiles (913) whose valve-opening angles are larger than valve-opening angles of the first cam profile (911) and the second cam profile (912) and which is configured to open the first exhaust valve (7) and the second exhaust valve (8), and
a cam switching unit (93) which is configured to perform switching to the first cam set (9A) or the second cam set (9B),
the controller (100) is configured to control the cam switching unit (93)
to open and/or close the first exhaust valve (7) and the second exhaust valve (8) by the first cam set (9A) in the first region (R1), and
to open and/or close the first exhaust valve (7) and the second exhaust valve (8) by the second cam set (9B) in the second region (R2).

4. The control device according to claim 3, wherein
the first cam profile (911) is configured to
set a valve-opening time point of the first exhaust valve (7) to an intermediate period of a combustion stroke of the engine (1), and
set a valve-closing time point of the first exhaust valve (7) to fall within a period from the initial period to an intermediate period of the exhaust stroke of the engine (1).

5. The control device according to claim 3 or 4, wherein
the second cam profile (912) is configured to
set a valve-opening time point of the second exhaust valve (8) to an end period of a combustion stroke of the engine (1), and
set a valve-closing time point of the second exhaust valve (8) to fall within a period from an end period of the exhaust stroke to an initial period of an intake stroke of the engine (1).

6. The control device according to any one of claims 3 to 5, wherein
the first cam profile (911) is configured to set a lift amount of the first exhaust valve (7) smaller than a lift amount of the first exhaust valve (7) by the third cam profile (913) and a lift amount of the second exhaust valve (8) by the second cam profile (912), and
the second cam profile (912) is configured to set a lift amount of the second exhaust valve (8) smaller than a lift amount of the second exhaust valve (8) by the third cam profile (913).

7. The control device according to any one of claims 3 to 6, wherein
the controller (100) is configured to cause a timing when the first switching valve (21) is opened and the second switching valve (22) is closed and a timing when switching is made from the first cam set (9A) to the second cam set (9B) to be different from each other in transition from the first region (R1) to the second region (R2).

8. The control device according to claim 7, wherein
the controller (100) is configured to perform switching from the first cam set (9A) to the second cam set (9B) after the first switching valve (21) is opened and the second switching valve (22) is closed.

9. The control device according to claim 7 or 8, further comprising
a supercharging pressure sensor (SW1) which is configured to detect a supercharging pressure of the supercharger (19), wherein
the controller (100) is configured to set a target supercharging pressure in accordance with an operation state of the engine (1),
the controller (100) is configured to determine whether or not the supercharging pressure reaches the target supercharging pressure based on a detection signal by the supercharging pressure sensor (SW1), and
in transition from the first region (R1) to the second region (R2), the controller (100) is configured to
adjourn switching from the first cam set (9A) to the second cam set (9B) until a determination is made that the supercharging pressure reaches the target supercharging pressure, and
open the first switching valve (21) and close the second switching valve (22) regardless of whether or not the supercharging pressure reaches the target supercharging pressure.

10. The control device according to claim 9, wherein
the controller (100) is configured to perform switching from the first cam set (9A) to the second cam set (9B) if the supercharging pressure reaches the target supercharging pressure.

11. An automobile comprising:
the control device according to any one of the preceding claims; and
the engine (1).

## Patentansprüche

1. Steuervorrichtung für einen Motor (1), wobei der Motor (1) Folgendes umfasst:
eine erste Auslassöffnung (5) und eine zweite Auslassöffnung (6), welche konfiguriert ist, um sich in jeden Zylinder (2) des Motors (1) zu öffnen;
ein erstes Auslassventil (7), welches konfiguriert ist, um die erste Auslassöffnung (5) zu öffnen und/oder schließen;
ein zweites Auslassventil (8), welches konfiguriert ist, um die zweite Auslassöffnung (6) zu öffnen und/oder schließen;
einen Auslassventilmechanismus (9), welcher konfiguriert ist, um das erste Auslassventil (7) mindestens zu einem früheren Zeitpunkt als ein Anfangszeitraum eines Auslasshubs zu öffnen und währenddessen das zweite Auslassventil (8) zu einem späteren Zeitpunkt als das erste Auslassventil (7) zu öffnen;
einen Auslasskanal (16), welcher mit der ersten Auslassöffnung (5) und der zweiten Auslassöffnung (6) verbunden ist; und
einem Auflader (19), welcher aus einer Turbine (17), die dem Auslasskanal (16) bereitgestellt ist, und einem Kompressor (13), der einem Ansaugkanal (11) des Motors (1) bereitgestellt ist, besteht, wobei
der Auslasskanal (16) Folgendes aufweist:
einen ersten Auslasskanal (161), welcher mit der ersten Auslassöffnung (5) verbunden ist und in welchem die Turbine (17) angeordnet ist,
einen zweiten Auslasskanal (162), welcher mit der zweiten Auslassöffnung (6) verbunden ist und mit dem ersten Auslasskanal (161) zusammengeführt ist, während er die Turbine (17) umgeht, und
einen dritten Auslasskanal (163), welcher den ersten Auslasskanal (161) auf einer stromaufwärtigen Seite der Turbine (17) mit dem zweiten Auslasskanal (162) verbindet,
wobei die Steuervorrichtung Folgendes umfasst:
ein erstes Schaltventil (21), welches konfiguriert ist, um in dem dritten Auslasskanal (163) angeordnet zu werden und einen Kanalbereich des dritten Auslasskanals (163) zu ändern;
ein zweites Schaltventil (22), welches konfiguriert ist, um in dem zweiten Auslasskanal (162) auf einer stromabwärtigen Seite eines Verbindungsabschnitts (16c) mit dem dritten Auslasskanal (163) und auf einer stromaufwärtigen Seite eines Zusammenführungsabschnitts (16b) mit dem ersten Auslasskanal (161) angeordnet zu werden, und welches konfiguriert ist, um einen Kanalbereich des zweiten Auslasskanals (162) zu ändern;
einen Drehzahlsensor (SW2), welcher konfiguriert ist, um eine Motordrehzahl zu erfassen;
einen Gaspedal-Öffnungssensor (SW3); und
eine Steuerung (100), welche konfiguriert ist, um eine Last auf dem Motor (1) basierend auf einem Signal des Gaspedal-Öffnungssensors (SW3) zu berechnen, wobei
ein Betriebsbereich des Motors (1) einen ersten Bereich (R1), in welchem die Motordrehzahl niedriger als eine erste Drehzahl (Th1) ist, und einen zweiten Bereich (R2), in welchem die Motordrehzahl eine zweite Drehzahl (Th2) oder höher als die zweite Drehzahl (Th2) ist, einschließt,
die Steuerung (100) konfiguriert ist, um die erste Drehzahl (Th1) und die zweite Drehzahl (Th2) niedriger einzustellen, wenn die Last auf dem Motor (1) größer wird, und um die erste Drehzahl (Th1) bei einer konstanten Last kleiner als die zweite Drehzahl (Th2) einzustellen,
die Steuerung (100) konfiguriert ist, um das erste Auslassventil (7) mindestens zu dem früheren Zeitpunkt als der Anfangszeitraum des Auslasshubs zu öffnen und währenddessen das zweite Auslassventil (8) zu dem späteren Zeitpunkt als das erste Auslassventil (7) mindestens in dem ersten Bereich (R1) zu öffnen, und
die Steuerung (100) konfiguriert ist,
um mindestens in dem ersten Bereich (R1) das erste Schaltventil (21) zu schließen und das zweite Schaltventil (22) zu öffnen, und
um mindestens in dem zweiten Bereich (R2) das erste Schaltventil (21) zu öffnen und das zweite Schaltventil (22) zu schließen.

2. Steuervorrichtung nach Anspruch 1, wobei
die Steuerung (100) konfiguriert ist, um eine Öffnung des zweiten Schaltventils (22) auf eine Schließseite im Vergleich zu einem vollständig offenen Zustand in einem Fall, wo die Motordrehzahl höher als die erste Drehzahl (Th1) ist, festzulegen und die Öffnung des zweiten Schaltventils (22) so anzupassen, dass der Kanalbereich des zweiten Auslasskanals (162) in einem Fall, wo die Last auf dem Motor (1) hoch ist, groß wird im Vergleich zu einem Fall, wo die Last gering ist.

3. Steuervorrichtung nach einem der vorherigen Ansprüche, wobei
der Auslassventilmechanismus (9) Folgendes aufweist:
einen ersten Nockensatz (9A), der aus einem ersten Nockenprofil (911), welches konfiguriert ist, um das erste Auslassventil (7) mindestens zu dem früheren Zeitpunkt als der Anfangszeitraum des Auslasshubs zu öffnen, und einem zweiten Nockenprofil (912), welches das zweite Auslassventil (8) zu dem späteren Zeitpunkt als das erste Auslassventil (7) öffnet, besteht,
einen zweiten Nockensatz (9B), der aus einem Paar dritter Nockenprofile (913) besteht, dessen Ventilöffnungswinkel größer als die Ventilöffnungswinkel des ersten Nockenprofils (911) und des zweiten Nockenprofils (912) sind, und welches konfiguriert ist, um das erste Auslassventil (7) und das zweite Auslassventil (8) zu öffnen, und
eine Nockenwechseleinheit (93), welche konfiguriert ist, um ein Wechseln zu dem ersten Nockensatz (9A) oder dem zweiten Nockensatz (9B) durchzuführen,
wobei die Steuerung (100) konfiguriert ist, um die Nockenwechseleinheit (93) zu steuern,
um das erste Auslassventil (7) und das zweite Auslassventil (8) durch den ersten Nockensatz (9A) in dem ersten Bereich (R1) zu öffnen und/oder schließen, und
um das erste Auslassventil (7) und das zweite Auslassventil (8) durch den zweiten Nockensatz (9B) in dem zweiten Bereich (R2) zu öffnen und/oder schließen.

4. Steuervorrichtung nach Anspruch 3, wobei
das erste Nockenprofil (911) konfiguriert ist, um
einen Ventilöffnungszeitpunkt des ersten Auslassventils (7) auf einen Zwischenzeitraum eines Verbrennungshubs des Motors (1) festzulegen, und
einen Ventilschließzeitpunkt des ersten Auslassventils (7) so festzulegen, dass er in einen Zeitraum von dem Anfangszeitraum bis zu einem Zwischenzeitraum des Auslasshubs des Motors (1) fällt.

5. Steuervorrichtung nach Anspruch 3 oder 4, wobei
das zweite Nockenprofil (912) konfiguriert ist, um
einen Ventilöffnungszeitpunkt des zweiten Auslassventils (8) auf einen Endzeitraum eines Verbrennungshubs des Motors (1) festzulegen, und
einen Ventilschließzeitpunkt des zweiten Auslassventils (8) so festzulegen, dass er in einen Zeitraum von einem Endzeitraum des Auslasshubs bis zu einem Anfangszeitraum eines Ansaughubs des Motors (1) fällt.

6. Steuervorrichtung nach einem der Ansprüche 3 bis 5, wobei
das erste Nockenprofil (911) konfiguriert ist, um einen Anhebebetrag des ersten Auslassventils (7) kleiner als einen Anhebebetrag des ersten Auslassventils (7) durch das dritte Nockenprofil (913) und einen Anhebebetrag des zweiten Auslassventils (8) durch das zweite Nockenprofil (912) festzulegen, und
das zweite Nockenprofil (912) konfiguriert ist, um einen Anhebebetrag des zweiten Auslassventils (8) kleiner als einen Anhebebetrag des zweiten Auslassventils (8) durch das dritte Nockenprofil (913) festzulegen.

7. Steuervorrichtung nach einem der Ansprüche 3 bis 6, wobei
die Steuerung (100) konfiguriert ist, um zu bewirken, dass ein Zeitpunkt, wenn das erste Schaltventil (21) geöffnet wird und das zweite Schaltventil (22) geschlossen wird, und ein Zeitpunkt, wenn ein Wechseln von dem ersten Nockensatz (9A) zu dem zweiten Nockensatz (9B) vorgenommen wird, sich bei dem Übergang von dem ersten Bereich (R1) in den zweiten Bereich (R2) voneinander unterscheiden.

8. Steuervorrichtung nach Anspruch 7, wobei
die Steuerung (100) konfiguriert ist, um ein Wechseln von dem ersten Nockensatz (9A) zu dem zweiten Nockensatz (9B) durchzuführen, nachdem das erste Schaltventil (21) geöffnet wird und das zweite Schaltventil (22) geschlossen wird.

9. Steuervorrichtung nach Anspruch 7 oder 8, ferner umfassend
einen Ladedrucksensor (SW1), welcher konfiguriert ist, um einen Ladedruck des Aufladers (19) zu erfassen, wobei
die Steuerung (100) konfiguriert ist, um einen Zielladedruck gemäß einem Betriebszustand des Motors (1) festzulegen,
wobei die Steuerung (100) konfiguriert ist, um basierend auf einem Erfassungssignal durch den Ladedrucksensor (SW1) zu bestimmen, ob der Ladedruck den Zielladedruck erreicht oder nicht, und
bei dem Übergang von dem ersten Bereich (R1) in den zweiten Bereich (R2) die Steuerung (100) konfiguriert ist, um
das Wechseln von dem ersten Nockensatz (9A) zu dem zweiten Nockensatz (9B) zu verschieben, bis eine Bestimmung erfolgt, dass der Ladedruck den Zielladedruck erreicht, und
das erste Schaltventil (21) zu öffnen und das zweite Schaltventil (22) zu schließen, unabhängig davon, ob der Ladedruck den Zielladedruck erreicht oder nicht.

10. Steuervorrichtung nach Anspruch 9, wobei
die Steuerung (100) konfiguriert ist, um ein Wechseln von dem ersten Nockensatz (9A) zu dem zweiten Nockensatz (9B) durchzuführen, wenn der Ladedruck den Zielladedruck erreicht.

11. Automobil umfassend:
die Steuervorrichtung nach einem der vorherigen Ansprüche; und
den Motor (1).

## Revendications

1. Dispositif de commande pour un moteur (1), le moteur (1) comprenant :
un premier orifice d'échappement (5) et un deuxième orifice d'échappement (6), qui est configuré pour déboucher dans chaque cylindre (2) du moteur (1) ;
une première soupape d'échappement (7), qui est configurée pour ouvrir et/ou fermer le premier orifice d'échappement (5) ;
une deuxième soupape d'échappement (8), qui est configurée pour ouvrir et/ou fermer le deuxième orifice d'échappement (6) ;
un mécanisme de soupape d'échappement (9), qui est configuré pour ouvrir la première soupape d'échappement (7) au moins à un moment antérieur à une période initiale d'une course d'échappement et pour ouvrir entre-temps la deuxième soupape d'échappement (8) à un moment ultérieur par rapport à la première soupape d'échappement (7) ;
un passage d'échappement (16), qui est relié au premier orifice d'échappement (5) et au deuxième orifice d'échappement (6) ; et
un dispositif de suralimentation (19) qui se compose d'une turbine (17) prévue sur le passage d'échappement (16) et d'un compresseur (13) prévu sur un passage d'admission (11) du moteur (1), dans lequel
le passage d'échappement (16) présente
un premier passage d'échappement (161), qui est relié au premier orifice d'échappement (5) et dans lequel la turbine (17) est disposée,
un deuxième passage d'échappement (162), qui est relié au deuxième orifice d'échappement (6) et fusionne avec le premier passage d'échappement (161) tout en contournant la turbine (17), et
un troisième passage d'échappement (163), qui relie le premier passage d'échappement (161) sur un côté en amont de la turbine (17) au deuxième passage d'échappement (162),
le dispositif de commande comprenant :
une première soupape de commutation (21), qui est configurée pour être disposée dans le troisième passage d'échappement (163) et pour changer une zone de canal du troisième passage d'échappement (163) ;
une deuxième soupape de commutation (22), qui est configurée pour être disposée dans le deuxième passage d'échappement (162) sur un côté en aval d'une partie de raccordement (16c) avec le troisième passage d'échappement (163) et sur un côté en amont d'une partie de fusionnement (16b) avec le premier passage d'échappement (161) et qui est configurée pour changer une zone de canal du deuxième passage d'échappement (162) ;
un capteur de vitesse de rotation (SW2), qui est configuré pour détecter une vitesse de moteur ;
un capteur d'ouverture d'accélérateur (SW3) ; et
un dispositif de commande (100), qui est configuré pour calculer une charge sur le moteur (1) sur la base d'un signal du capteur d'ouverture d'accélérateur (SW3), dans lequel
une plage de fonctionnement du moteur (1) comporte une première plage (R1), dans laquelle la vitesse de moteur est inférieure à une première vitesse de rotation (Th1), et une deuxième plage (R2), dans laquelle la vitesse de moteur est une deuxième vitesse de rotation (Th2) ou est supérieure à la deuxième vitesse de rotation (Th2),
le dispositif de commande (100) est configuré pour définir la première vitesse de rotation (Th1) et la deuxième vitesse de rotation (Th2) de manière inférieure à mesure que la charge sur le moteur (1) devient plus importante et pour définir à une charge constante la première vitesse de rotation (Th1) de manière inférieure à la deuxième vitesse de rotation (Th2),
le dispositif de commande (100) est configuré pour ouvrir la première soupape d'échappement (7) au moins au moment antérieur à la période initiale d'une course d'échappement et pour ouvrir entre-temps la deuxième soupape d'échappement (8) au moment ultérieur par rapport à la première soupape de commutation (7) moins dans la première plage (R1), et
le dispositif de commande (100) est configuré
pour fermer la première soupape de commutation (21) et ouvrir la deuxième soupape de commutation (22) au moins dans la première plage (R1), et
pour ouvrir la première soupape de commutation (21) et fermer la deuxième soupape de commutation (22) au moins dans la deuxième plage (R2).

2. Dispositif de commande selon la revendication 1, dans lequel
le dispositif de commande (100) est configuré pour définir une ouverture de la deuxième soupape de commutation (22) sur un côté de fermeture par rapport à un état complètement ouvert dans un cas où la vitesse de moteur est supérieure à la première vitesse de rotation (Th1) et pour ajuster l'ouverture de la deuxième soupape de commutation (22) de telle sorte que la zone de canal du deuxième passage d'échappement (162) devient importante dans un cas où la charge sur le moteur (1) devient importante dans un cas où la charge est faible.

3. Dispositif de commande selon l'une quelconque des revendications précédentes, dans lequel
le mécanisme de soupape d'échappement (9) présente
un premier jeu de cames (9A) composé d'un premier profil de came (911), qui est configuré pour ouvrir la première soupape d'échappement (7) au moins à un moment antérieur à la période initiale de la course d'échappement, et d'un second profil de came (912), qui ouvre la deuxième soupape d'échappement (8) à un moment ultérieur par rapport à la première soupape d'échappement (7),
un deuxième jeu de cames (9B) composé d'une paire de troisièmes profils de came (913), dont les angles d'ouverture de soupape sont plus grands que les angles d'ouverture de soupape du premier profil de came (911) et du deuxième profil de came (912) et qui est configuré pour ouvrir la première soupape d'échappement (7) et la deuxième soupape d'échappement (8), et
une unité de commutation de came (93), qui est configurée pour effectuer la commutation sur le premier jeu de cames (9A) ou le deuxième jeu de cames (9B),
le dispositif de commande (100) est configuré pour commander l'unité de commutation de came (93)
pour ouvrir et/ou fermer la première soupape d'échappement (7) et la deuxième soupape d'échappement (8) par le premier jeu de cames (9A) dans la première plage (R1), et
pour ouvrir et/ou fermer la première soupape d'échappement (7) et la deuxième soupape d'échappement (8) par le deuxième jeu de cames (9B) dans la deuxième plage (R2).

4. Dispositif de commande selon la revendication 3, dans lequel
le premier profil de came (911) est configuré pour
définir un point dans le temps d'ouverture de soupape de la première soupape d'échappement (7) à une période intermédiaire d'une course de combustion du moteur (1), et
définir un point dans le temps de fermeture de soupape de la première soupape d'échappement (7) pour tomber dans une période allant de la période initiale à une période intermédiaire de la course d'échappement du moteur (1).

5. Dispositif de commande selon la revendication 3 ou 4, dans lequel
le deuxième profil de came (912) est configuré pour
définir un point dans le temps d'ouverture de soupape de la deuxième soupape d'échappement (8) à une période de fin d'une course de combustion du moteur (1), et
définir un point dans le temps de fermeture de soupape de la deuxième soupape d'échappement (8) pour tomber dans une période allant d'une période de fin de la course d'échappement à une période initiale d'une course d'admission du moteur (1).

6. Dispositif de commande selon l'une quelconque des revendications 3 à 5, dans lequel
le premier profil de jeu (911) est configuré pour définir une quantité de levée de la première soupape d'échappement (7) inférieure à une quantité de levée de la première soupape d'échappement (7) par le troisième profil de came (913) et à une quantité de levée de la deuxième soupape d'échappement (8) par le deuxième profil de came (912), et
le deuxième profil de came (912) est configuré pour définir une quantité de levée de la deuxième soupape d'échappement (8) inférieure à une quantité de levée de la deuxième soupape d'échappement (8) par le troisième profil de came (913).

7. Dispositif de commande selon l'une quelconque des revendications 3 à 6, dans lequel
le dispositif de commande (100) est configuré pour provoquer une synchronisation lorsque la première soupape de commutation (21) est ouverte et que la deuxième soupape de commutation (22) est fermée et une synchronisation lorsque la commutation est effectuée depuis le premier jeu de cames (9A) au deuxième jeu de cames (9B) de manière à être différents l'un de l'autre dans la transition de la première plage (R1) à la deuxième plage (R2).

8. Dispositif de commande selon la revendication 7, dans lequel
le dispositif de commande (100) est configuré pour effectuer une commutation depuis le premier jeu de cames (9A) au deuxième jeu de cames (9B) après l'ouverture de la première soupape de commutation (21) et la fermeture de la deuxième soupape de commutation (22).

9. Dispositif de commande selon la revendication 7 ou 8, comprenant en outre
un capteur de pression de suralimentation (SW1), qui est configuré pour détecter une pression de suralimentation du dispositif de suralimentation (19), dans lequel
le dispositif de commande (100) est configuré pour définir une pression de suralimentation cible conformément à un état de fonctionnement du moteur (1),
le dispositif de commande (100) est configuré pour déterminer si la pression de suralimentation atteint ou non la pression de suralimentation cible sur la base d'un signal de détection par le capteur de pression de suralimentation (SW1), et
en transition de la première plage (R1) à la deuxième plage (R2), le dispositif de commande (100) est configuré pour
reporter la commutation depuis le premier jeu de cames (9A) au deuxième jeu de cames (9B) jusqu'à ce qu'il soit déterminé que la pression de suralimentation atteint la pression de suralimentation cible, et
ouvrir la première soupape de commutation (21) et fermer la deuxième soupape de commutation (22) indépendamment du fait que la pression de suralimentation atteigne ou non la pression de suralimentation cible.

10. Dispositif de commande selon la revendication 9, dans lequel
le dispositif de commande (100) est configuré pour effectuer la commutation du premier jeu de cames (9A) au deuxième jeu de cames (9B) si la pression de suralimentation atteint la pression de suralimentation cible.

11. Automobile comprenant :
le dispositif de commande selon l'une quelconque des revendications précédentes ; et
le moteur (1).
